# FASCICULE DE BREVET EUROPEEN

(11) **EP 3 143 329 B1**
(45) Date de publication et mention de la délivrance du brevet: **24.05.2023**
(21) Numéro de dépôt: 15726237.9
(22) Date de dépôt: 13.05.2015
(51) Int. Cl.: F21V 33/00, A47F 11/10, F21V 8/00, F21W 131/301, F21Y 103/00

(54) **ENSEMBLE VITRE LUMINEUX, PORTE ET MEUBLE RÉFRIGÉRÉ AVEC CET ENSEMBLE ET FABRICATION**
BELEUCHTETE GLASANORDNUNG, TÜR UND KÜHLVITRINE MIT DIESER ANORDNUNG UND HERSTELLUNG
ILLUMINATED GLAZED ASSEMBLY, DOOR AND REFRIGERATED CASE WITH SAID ASSEMBLY AND PRODUCTION

(30) Priorité: 13.05.2014 FR 1454262
(43) Date de publication de la demande: 22.03.2017
(73) Titulaire: SAINT-GOBAIN GLASS FRANCE, 92400 Courbevoie (FR)
(72) Inventeur: GIERENS, Anne, 40545 Dusseldorf (DE); WOLFF, Richard, F-60190 Pronleroy (FR); DIEU, Stéphane, F-60162 Vignemont (FR)
(74) Mandataire: Saint-Gobain Recherche
(86) Numéro de dépôt international: PCT/FR2015/051262
(87) Numéro de publication internationale: WO 2015/173516

(56) Documents cités:
- WO-A1-2012/168661
- WO-A1-2013/017792
- DE-U1-202008 011 548
- JP-A- 2010 009 845

## Description

La présente invention concerne les vitrages isolants de porte de meuble réfrigéré, et en particulier un ensemble vitré lumineux pour porte de meuble réfrigéré, la porte avec un tel ensemble et le meuble avec une telle porte, et sa fabrication.

On connaît un vitrage isolant destiné à l'ouvrant d'une enceinte réfrigérée, enceinte dans laquelle sont exposés des produits froids ou surgelés, tels que des produits alimentaires ou boissons, ou tous autres produits nécessitant une conservation dans le froid, par exemple des produits pharmaceutiques ou même des fleurs. Le vitrage isolant est constitué d'au moins deux substrats verriers séparés par une lame de gaz et pourvus pour au moins l'un d'eux d'un revêtement bas émissif.

Lorsque des produits conservés dans une enceinte réfrigérée doivent rester visibles comme c'est le cas dans de nombreux locaux commerciaux actuels, on équipe l'enceinte réfrigérée de parties vitrées qui la transforment en une " vitrine " réfrigérée dont la dénomination commune est " meuble frigorifique de vente ". Il existe plusieurs variantes de ces " vitrines ". Certaines ont la forme d'armoire et alors, c'est la porte elle-même qui est transparente, d'autres constituent des coffres et c'est le couvercle horizontal (porte à l'horizontale) qui est vitré pour permettre l'observation du contenu.

La fonction lumière est généralement à l'intérieur de l'enceinte. Plus récemment dans la demande WO2013/017792 est proposée une porte de meuble réfrigéré éclairée comportant un vitrage isolant des diodes électroluminescentes couplées optiquement à la tranche de l'un des deux verres et dont le profilé de montage de porte est évidé pour insérer les diodes via un capot masquant cet évidement du profilé. Un ensemble vitreux lumineux selon l'art antérieur est proposé dans le document WO2012/168661.

Aussi, la présente invention vise un vitrage isolant lumineux de porte de meuble réfrigéré à source de lumière écologique et efficace (diodes électroluminescentes, fibre(s) optique(s) couplé à une ou des diodes par exemple), robuste et fiable, sans nécessité de modifier le profilé de porte.

L'invention propose à cet effet un ensemble vitré lumineux pour porte (vitrée) - verticale ou horizontale donc couvercle inclus- de meuble réfrigéré (armoire, coffre...) comportant un vitrage isolant avec une face principale interne (de préférence côté meuble et même la plus extérieure des faces principales côté meuble) et une face principale externe (de préférence côté extérieur, usager, et la plus extérieure des faces principales), le vitrage isolant comprenant:
- un premier vitrage comportant la face externe et une première tranche formée de (quatre) bords, premier vitrage incluant une première feuille en verre présentant une première face principale et une deuxième face principale, en verre de préférence minéral (d'indice de réfraction inférieur à 1,65 à 550nm typiquement), de préférence la première feuille étant rectangulaire (carré compris), la première face étant la face externe ou la première feuille étant feuilletée à une autre feuille de verre (avec ladite face externe) ou encore le premier vitrage est le verre central (simple) d'un triple vitrage (bien que moins préféré à une face externe la plus extérieure du vitrage- avec la face interne-)
- un deuxième vitrage comportant la face interne et une deuxième tranche formée de bords, deuxième vitrage incluant une deuxième feuille en verre de préférence minéral, avec une troisième et une quatrième face principale, les deuxième et troisième faces étant espacées par une première lame de gaz (air ou gaz inerte), la quatrième face étant la face interne ou la deuxième feuille étant feuilletée à une autre feuille de verre (avec ladite face interne) ou encore une troisième feuille en verre (avec ladite face interne) est espacée de la deuxième feuille par une deuxième lame de gaz (avec en périphérie des quatrième et cinquième faces un deuxième joint polymérique en cadre notamment rectangulaire)-
- en périphérie des deuxième et troisième faces un premier joint polymérique en cadre (rectangulaire), typiquement un mastic
- une source de lumière externe au vitrage isolant, source lumineuse (avec une zone émettrice ou face émettrice étant de préférence en regard du bord d'injection) choisie de préférence parmi :
   - des diodes électroluminescentes (alignées) comportant chacune une puce semi-conductrice avec une face émettrice, -source de lumière préférée - ,
   - et une fibre optique (couplée à une source primaire comme une diode électroluminescente) avec une partie latérale formant la zone émettrice, source de lumière couplée optiquement avec l'un des bords, dit bord d'injection (la zone émettrice ou face émettrice étant de préférence en regard du bord d'injection) pour une propagation de la lumière (injectée) par réflexion totale interne dans l'épaisseur (tout ou partie de l'épaisseur notamment si premier vitrage est un feuilleté) du premier vitrage jouant alors le rôle de guide de la lumière, la source de lumière étant espacée du bord d'injection ou en contact (de préférence avec couche de protection),
   - un support de source, portant la source de lumière, ne dépassant pas de la première tranche en direction de la face externe (et même du vitrage isolant) et, qui pour les diodes est une carte à circuit imprimé (profilé, méplat, barrette) de préférence sur un métal pour la dissipation thermique (alu, acier inox, cuivre, argent etc),
   - des moyens d'extraction de la lumière guidée associé au premier vitrage (de préférence directement sur une face principale), de préférence à la première feuille, -coté face externe ou à l'opposé-, pour former au moins une zone lumineuse, (moyens d'extraction de la lumière éventuellement vendus séparément ou dans un ensemble vitré lumineux en kit et/ou ajoutés par l'utilisateur)
   - de préférence au moins une première couche à fonction thermique sur la deuxième feuille, mieux sur la troisième face en regard de la deuxième face si double vitrage et/ou sur la troisième feuille optionnelle (si triple vitrage) notamment la sixième face, la première feuille (verre clair ou extraclair de préférence) étant de préférence exempte de couche à fonction thermique - et distincte d'une couche d'extraction de lumière sur la première face ou la deuxième face-
   et, l'ensemble vitré comprend en outre :
   - directement en contact adhésif avec le (bord externe du) premier joint polymérique, une pièce, dite de fixation, de préférence métallique, adjacente au bord d'injection, de préférence n'est pas en contact à la fois avec le premier vitrage et le deuxième vitrage, et mieux n'est pas en contact au moins avec le deuxième vitrage, - notamment pièce distincte d'un montant d'encadrement (additionnel)- et est un profilé notamment longeant la périphérie du bord d'injection
   - une pièce dit de fond, de préférence métallique voire métallisée (ou rendue réflectrice), de préférence solidaire et même de préférence monolithique avec la pièce de fixation, en regard et espacée du bord d'injection, - notamment pièce distincte d'un montant d'encadrement (additionnel)-la source de lumière étant logée entre la pièce de fond et le bord d'injection, le support de source pour la fibre optique pouvant être directement la pièce de fond, la pièce de fixation (en contact avec la fibre optique).

La pièce de fixation qui est un profilé est fixée aisément via le premier joint sur le vitrage isolant pendant sa fabrication en tirant parti du fait que le premier joint est à l'état collant, par exemple la pièce est fixée après la pose du premier joint encore à l'état collant (premier mode de fabrication) ou une fois la matière de joint est déposée après positionnement de la pièce de fixation (deuxième mode de fabrication). La pièce de fixation profilé permet :
- de bien positionner ou même de poser la source de lumière dessus, en facilitant l'alignement optique au bord d'injection (en particulier pour les diodes), en particulier la carte de circuit imprimé est sur la pièce de fixation (contre, sans contact adhésif ou même toute type de fixation permanente) ou la tranche de la carte de circuit imprimé est contre la pièce de fixation (contre, sans contact adhésif ou même toute type de fixation permanente)
- de ne pas modifier (substantiellement) le profilé d'encadrement classique de la porte notamment si la démontabilité de la source n'est pas exigée.
- lors du montage du profilé d'encadrement, de protéger mécaniquement la source (et même le support de source), dans le premier mode de fabrication
- de participer à la suppression des chemins de diffusions de la colle le plus souvent utilisée pour fixer le profilé d'encadrement (vitrage isolant à l'horizontal) contre la tranche du vitrage isolant,
- un montage plus simple qu'avec des alésages du premier joint ou des inserts (chevilles) dans le premier joint pour loger des vis venant se fixer dans une pièce trouée porteuse du support de source, comme proposé pour un double vitrage lumineux dans la demande de brevet WO2012/198661 (figure 2).
- éventuellement de canaliser la lumière et mieux de réfléchir la lumière pour minimiser les pertes d'injection.

La pièce de fixation n'est pas un élément d'attache de type vis d'une pièce porteuse de la source ou du support de source, pièce porteuse trouée à cet effet. Elle permet (avec la pièce de fond et un capot) de former une cavité de dimensions adaptées (les plus faibles possibles) pour loger source et support de source.

La pièce de fixation, saillante du premier joint peut être avec le premier joint uniquement en contact adhésif direct (pas de colle entre eux). La pièce de fixation, saillante du premier joint, peut être en contact adhésif direct avec le premier joint et espacée du premier vitrage et/ou du deuxième vitrage (en particulier premier mode de fabrication). La pièce de fixation, saillante du premier joint, peut être en contact adhésif direct avec le premier joint et également être collée (colle, double face ..) en bordure de la deuxième face voire à l'espaceur, et même êetre collée en bordure de la troisième face (en particulier deuxième mode de fabrication). Si nécessaire cette colle sert pour éviter un pont thermique entre premier et deuxième vitrages.

On préfère alors une matière polymérique du premier joint qui tout en tenant bien sur le verre (minéral notamment) pour sa fonction d'étanchéité ne sèche pas immédiatement (en particulier pour le premier mode de réalisation), par exemple en au moins 15min ou en au moins 30min, par exemple quelques heures. Pour la matière du premier joint (assurant la tenue mécanique du vitrage et l'étanchéité à l'eau) on choisit de préférence :
- du silicone
- du polyuréthane (bi-composant),
- du polysulfure (bi-composant),
- une matière thermofusible (monocomposant).

La carte de circuit imprimé n'est pas fixée directement à la face externe (collage etc) car cela peut l'endommager. Si la démontabilité est souhaitée et/ou par précaution, la carte de circuit imprimé est de préférence une pièce distincte de la pièce de fixation et n'est pas fixée dans le premier joint (et même n'est pas en contact adhésif avec la pièce de fixation ou toute autre pièce non démontable).

La source de lumière (et le support de source comme la carte de circuit imprimé) est entre le bord d'injection et une pièce de fond et un profilé d'encadrement est fixé de préférence par collage au vitrage isolant, par la face externe et/ou la face arrière de la pièce de fond et/ou même la face arrière de la pièce de fixation, la tranche du deuxième vitrage et la face interne.

La source de lumière (e le support de source) est dans une cavité délimitée par le bord d'injection, pièce de fixation, pièce de fond (et un capot), notamment cavité ne comportant pas le profilé d'encadrement fixé de préférence par collage au vitrage isolant. La cavité est allongée, le long du bord d'injection (cavité longitudinale) et de préférence débouchante latéralement ( à l'une ou aux extrémités latérales des pièces de fond et de fixation). De préférence la cavité est dénuée de colle (optique).

La pièce de fixation est de préférence de forme simple, un profilé creux ou plein (fabrication libre : par extrusion, laminage, pliage...) par exemple de section fermée de préférence rectangulaire (carré compris) comme un parallélépipède en contact adhésif au premier joint par sa tranche (ou un retour) ou par une face principale.

De manière préférée, l'ensemble vitré comporte un capot fermant une cavité (débouchante latéralement) délimitée par le bord d'injection, la pièce de fixation et la pièce de fond, de préférence contre ou solidaire de la pièce de fixation, logeant la source de lumière (et le support de source, surtout des diodes) fermeture suivant la direction longitudinale du bord d'injection, capot de préférence métallique (ou métallisé). Le capot peut être même une extension de la pièce de fond (elle-même éventuellement une extension de la pièce de fixation) notamment l'ensemble formant une section de type en U tourné vers le premier vitrage.

La cavité n'est pas fermée latéralement de préférence, elle présente une ou des extrémités latérales ouvertes pour le montage et/ou démontage de la source de lumière.

La largeur de contact de la pièce de fixation au premier joint (largeur de la face dite avant est de préférence d'au moins 3mm. La surface de contact est unique ou en plusieurs zones. Par exemple il y a une pluralité de zones de contact adhésif (au moins deux zones) s'étendant le long du premier joint, notamment lorsque la pièce de fixation est (de type) en C ou en U tourné vers le premier joint, ou même E tourné vers le premier joint.

La pièce de fixation (éventuellement directement le support de source, notamment la carte PCB) peut éventuellement être partiellement ancrée dans le premier joint, s'enfonçant sur une profondeur de préférence d'au plus 3mm, laissant encore au moins par précaution de préférence au moins 1mm et même au moins 2mm d'épaisseur de premier joint (pour ne pas le percer).

L'épaisseur (profondeur) E4 de la pièce de fixation en saillie du bord d'injection est par exemple d'au plus 5mm et mieux d'au moins 3mm pour faciliter le placement du support de source (optionnel) et de la source. Le premier joint est de préférence d'épaisseur d'au moins 4mm et notamment de 6mm ±1mm (épaisseur standard).

Le bord externe du premier joint peut être droit ou concave, peut être en retrait (d'au plus 4mm de préférence) du bord d'injection ou affleurant voire dépassant du bord d'injection.

La distance entre deuxième et troisième face est de préférence d'au plus 20mm, et d'au moins 5mm ou 8mm, généralement de 10mm (±0,5 mm) ou de 14mm (± 0,5mm) en dimensions standards.

La pièce de fixation peut être une pièce pliée ou extrudée, comme une tôle métallique (aluminium etc), d'épaisseur de tôle Ep4 d'au moins 0,4mm et même d'au moins 1mm et même mieux d'au moins 1,5mm si la tenue mécanique est souhaitée (en particulier premier mode de fabrication).

On entend par profilé une pièce longiforme (plus longue que large) de préférence de profil constant :
- pour la pièce de fixation, le long de la périphérie du bord d'injection (à l'aplomb du bord), plus précisément le long du premier joint et directement en contact adhésif avec le premier joint (sur une ou au moins deux zones allongées de contact)
- pour la pièce de fond, le long du bord d'injection.

Le profilé qui est un méplat est une pièce (toujours allongée) avec peu d'épaisseur.

La pièce de fixation, (de section) rectangulaire ou en L, a de préférence un grand coté en contact avec le premier joint (face avant) et le petit côté (partie latérale) côté bord d'injection pour plus de largeur de contact adhésif avec le premier joint et/ou limiter la saillie de la pièce.

De préférence la largeur W4 de la pièce de fixation est entre 5 et 8mm (notamment qui correspond à la largeur de contact adhésif avec le premier joint), mieux est au moins inférieure à l'épaisseur du premier joint, par exemple avec une partie latérale (parallèle à la première face, perpendiculaire à la face avant collée au premier joint) de préférence décalée d'au moins 1 ou 2mm de la deuxième face surtout si le premier vitrage est simple (de 4 mm environ) car cela permet de loger plus facilement entièrement le support de source typiquement de 5mm de largeur pour un support PCB (carte de circuit imprimé), notamment en regard du bord d'injection (contre la pièce de fond) pour diodes à émission par le haut.

De préférence, la pièce de fixation et/ou la pièce de fond ou encore la deuxième tranche protège la source de lumière d'un désalignement et/ou d'un écrasement contre le bord d'injection notamment lors du montage d'un profilé d'encadrement (premier mode de fabrication).

Pour la fonction de protection (mécanique) de la source, la pièce de fixation (profilé etc) ou la deuxième tranche (dépassante du bord d'injection) peut être en saillie du support de source ou de la fibre optique directement sur la pièce de fond, saillie côté opposé au bord d'injection.

La pièce de fixation, pleine ou creuse, protège ainsi le support de source et/ou de la source.Le deuxième vitrage, de préférence d'au moins 3,8 mm d'épaisseur, peut être en saillie d'au moins 1mm, mieux d'au plus 5mm par rapport à la source ou au support de source (plus en arrière, éloigné du bord d'injection de la source le cas échéant) et présente une tranche plate (et même polie par exemple) - voire arrondi-.

Le bord d'injection est de préférence façonné droit -voire arrondi-.

Pour la protection mécanique, la pièce de fixation est par exemple un métal comme l'aluminium ou l'acier inox ou encore un plastique (comme le plexiglass, plutôt que le téflon) plastique avec de préférence un revêtement réflecteur de lumière de la source (métal etc.). Et la pièce de fixation est de préférence d'une épaisseur Ep4 d'au moins 1 mm mieux d'au moins 1,5mm pour la protection mécanique de la source si la pièce de fixation est creuse et de section fermée, notamment rectangulaire (carré compris) ou trapézoïdale ou de section ouverte de type en L (H, C vers le premier joint, C tourné vers l'opposé du premier joint).

La pièce de fixation peut être en outre cumulativement ou alternativement :
- réflectrice, métallique (spéculaire notamment) ou réflecteur blanc (couche diffusante comme une peinture...)
- peu encombrante : épaisseur totale E4 de préférence d'au plus 15mm et même 10mm ou 8mm pour limiter la surépaisseur (si pièce pleine)
- de préférence de section fermée.

La face arrière de la pièce de fixation (opposé à la face avant de contact au premier joint) -recevant la force de pression parallèle à la première face- peut être plane de préférence voire plane avec une cavité borgne (centrale) bombée vers le premier joint.

La pièce de fixation peut comporter une face arrière non anguleuse avec surface plate de largeur totale d'au moins 1mm et même 3mm. La largeur est cumulée si la surface est avec une cavité (C retourné ou H à 90°).

Le support de source (carte PCB de préférence) peut être plan :
- et en contact (non adhésif de préférence) avec une partie (paroi) plane de la pièce de fixation par exemple parallèle à la première face
- et même en contact (non adhésif de préférence) avec une partie (paroi) plane de la pièce de fond par exemple perpendiculaire à la première face,
- et même mieux en contact (non adhésif de préférence) avec une partie (paroi) plane d'un capot parallèle à la première face.

La pièce de fixation peut être de forme et dimensions plus libres tout en protégeant l'entrée latérale de colle (fixant le profilé d'encadrement au vitrage isolant) entre la source (diodes de préférence) et le bord d'injection et s'il porte la source évitant un désalignement au séchage La pièce de fixation est par exemple de section:
- en L (grand côté contre le premier joint de préférence) ou en C (ouverture coté premier joint ou de préférence côté opposé pour deux points de contacts)
- en H shifté à 90°.

Lorsque le deuxième vitrage est en saillie pour une protection de la source (diodes de préférence), la pièce de fixation peut être toute forme et dimensions, tout en protégeant de préférence l'entrée latérale de colle entre la source et le bord d'injection et s'il porte la source évitant un désalignement au séchage par exemple une pièce de section en triangle rectangle (hypoténuse côté deuxième feuille).

Plus largement, l'ensemble pièce de fixation-pièce de fond et capot est de préférence dimensionné et agencé pour protéger (le support de source et) de la source de la colle lors du montage du profilé d'encadrement (premier mode de fabrication). Si la colle est présente dans un coin entre le bord d'injection et un bord adjacent, on préfère compléter la protection par une pièce latérale supplémentaire sur l'extrémité latérale.

L'épaisseur cumulée support de diode et diodes est de préférence d'au plus 5mm, et même d'au plus 3mm.

De préférence, les diodes ne sont pas fixées au bord d'injection (ruban double face ou colle) ou alors doivent être préencapsulées.

La pièce de fixation peut être une pièce droite sur un seul bord du vitrage isolant.

La pièce de fixation peut être aussi une pièce coudée en L pour fixation au premier joint également à un bord du vitrage distinct et adjacent au bord d'injection.

La pièce de fixation peut être aussi un cadre en plusieurs pièces (aboutées), par exemple deux pièces en L ou quatre pièces.

En effet, on souhaiter éclairer par injection de lumière sur deux bords adjacents, deux bords opposés ou sur les trois ou les quatre bords.

De préférence on éclaire au moins sur un bord - par exemple longitudinal (vertical pour porte d'enceinte classique) ou latéral (horizontal pour une porte d'enceinte) et en fonction de la largeur du vitrage sur le bord opposé de l'homogénéité et la puissance souhaitée.

De préférence, pour éviter un pont thermique, la pièce de fixation qui est métallique n'est pas en contact à la fois avec le premier vitrage et le deuxième vitrage.

Pour une protection optimale contre la colle et/ou la protection mécanique, la pièce de fixation est de préférence de longueur L1 au moins sensiblement égale à la longueur L du bord d'injection ou au moins à la longueur de la source de lumière, si sur une zone limitée du bord d'injection. Le support de source (carte PCB de préférence) est de longueur inférieure ou égale de préférence à L1 (absent zone de coins, sans colle) et de préférence légèrement inférieure ou égale à L.

Un métal dissipateur thermique sous le support de source peut être la pièce de fixation, la pièce de fond ou un capot.

Dans le cas de la fibre optique le support de source peut être directement la pièce de fixation et/ou la pièce de fond.

Dans le cas des diodes, c'est une pièce de préférence distincte de la pièce de fixation et de fond, carte de circuit imprimé (ou `PCB' en anglais) métallique ou non (type « FR-4 »), de préférence un méplat sauf si la carte est directement dans le premier joint et n'est pas sur un métal.

Avec des diodes à émission par le haut (« top emitting » en anglais); le support de diodes qui est de préférence contre la pièce de fond (sans contact adhésif, démontable) peut toucher (même venir en butée) par la tranche, la face latérale de la pièce de fixation. Le support de source (carte de circuit imprimé) de préférence est de largeur inférieure à l'épaisseur du bord d'injection plus 1mm.

Avec des diodes à émission latérale (« side emitting » en anglais), les faces émettrices sont en regard du bord d'injection et le support de source (carte de circuit imprimé) parallèle à la face externe et de préférence contre la pièce de fixation jouant le rôle de dissipateur thermique ou même est confondu avec la pièce de fixation (sans démontabilité possible).

De préférence, la source de lumière s'étend le long du bord d'injection pour éviter les zones sombres. La longueur de la source de lumière est sensiblement égale à la longueur du bord d'injection.

La pièce de fond est de préférence alternativement ou cumulativement:
- métallique et épaisse si elle joue le rôle de dissipateur thermique (arrière du support de source, en contact)
- réflectrice pour rediriger les rayons, notamment métallique ou polymère (dur de préférence) métallisé
- un profilé comme un méplat
- une forme simple : section rectangulaire (prolongée par un capot éventuel)
- avec une paroi interne en regard du bord d'injection plane, parallèle au plan moyen de la première feuille.

La pièce de fond est de préférence de longueur L5 au moins sensiblement égale à la longueur L du bord d'injection (absent de la zone de coin, sans colle) et de préférence légèrement inférieure (d'au plus 20mm ou égale à L) et mieux sensiblement égale à la longueur L4 de la pièce de fixation.

La pièce de fond est de préférence d'épaisseur Ep5 d'au moins 0,8mm et même d'au moins 1mm et mieux d'au moins 1,5mm de préférence par exemple une tôle métallique (aluminium etc), Ep5 pouvant être égale à Ep4 (pièce monolithique en particulier et avec capot distinct ou non).

La pièce de fond forme de préférence un décrochement latéral qui peut affleurer la face arrière de la pièce de fixation ou même est plus proche du bord d'injection.

La largeur W5 de la pièce de fond peut être légèrement supérieure à l'épaisseur de la première feuille (surtout si premier vitrage simple) pour loger le support de diodes à émission par le haut entièrement typiquement de largeur W2 de 5mm.

La pièce de fond peut être une pièce de fixation droite sur un seul bord de vitrage isolant.

Comme la pièce de fixation, la pièce de fond peut être aussi en regard d'un bord du vitrage distinct et adjacent au bord d'injection ou même d'autres bords :
- pièce coudée en L
- ou des pièces aboutées (au coin etc) pour fixation au premier joint également à un bord du vitrage distinct et adjacent au bord d'injection
- ou un cadre en une pièce (coudée aux quatre coins) ou en plusieurs pièces aboutées.

En effet, on souhaiter éclairer par injection de lumière sur deux bords adjacents, deux bords opposés ou sur les trois ou quatre bords.

Par simplicité de préférence la pièce de fond est contre, mieux solidaire de la pièce de fixation (pour étanchéité contre la colle) même si elle peut aussi être contre, mieux solidaire du deuxième vitrage (pour étanchéité contre la colle) notamment deuxième vitrage dépassant (pour une protection mécanique).

De manière avantageuse, par simplicité, la pièce de fond prolonge la pièce de fixation formant une pièce monolithique de préférence métallique (ou plastique notamment métallisée), notamment une tôle pliée - en aluminium- notamment pièce de fond forme un décrochement latéral de la pièce de fixation.

Lorsque la deuxième tranche dépassante du bord d'injection est en saillie du support de source ou de la fibre optique directement sur la pièce de fond, saillie côté opposé au bord d'injection, et le support de source est directement en contact adhésif avec le premier joint éventuellement confondu avec la pièce de fixation. En particulier le support de sources est une carte de circuit imprimé et la source des diodes à émission latérale.

Le support de source, notamment carte de circuit imprimé ou `PCB', peut être de préférence dans une cavité (débouchante latéralement) formée par le bord d'injection, la pièce de fond et la pièce de fixation, et est en contact non adhésif avec la pièce de fond métallique et/ou la pièce de fixation métallique, et peut être même porté par le capot métallique qui peut être démontable ou encore capot prolongeant la pièce de fond métallique.

Le support de source, notamment carte de circuit imprimé, peut être dans la cavité délimitée par le bord d'injection, la pièce de fond et la pièce de fixation (et le capot) en contact non adhésif avec la pièce de fond de préférence métallique et/ou la pièce de fixation de préférence métallique et même sans fixation (mécanique, magnétique etc) avec la pièce de fond de préférence métallique et/ou avec la pièce de fixation et même sans fixation avec le capot (mécanique, magnétique etc).

La section de la cavité peut être un carré, un rectangle. Les parois délimitant la cavité (hormis le bord d'injection) formées par capot/ pièce de fond/ (partie latérale de) la pièce de fixation peuvent former (en une pièce ou deux pièces) un U tourné vers le vitrage, un C tourné vers le vitrage, (partie latérale de) la pièce de fixation étant espacé de la deuxième face par le premier joint ou par une colle,

Le support de source (carte de circuit imprimé) de préférence n'est pas noyé dans une encapsulation polymérique (et avec les diodes).

Le support de source et/ou la fibre optique est alors simplement contre la pièce de fond et/ou de fixation espacée ou non du bord d'injection.

De manière préférée, avant installation du profilé d'encadrement (avec de la colle), on peut ajouter un capot fermant une cavité (débouchante latéralement) délimitée par le bord d'injection, la pièce de fixation et la pièce de fond, de préférence contre ou solidaire de la pièce de fixation, logeant la source de lumière (et le support de source, surtout des diodes) fermeture suivant la direction longitudinale du bord d'injection, capot de préférence métallique (ou métallisé).La cavité n'est pas fermée latéralement, elle présente des extrémités latérales ouvertes.

Il n'est pas nécessaire de démonter le capot même si on souhaite démonter la source (démontage latéralement de la source). Le capot peut donc être fixé (un ou deux côtés) sans être à démonter.

Dans un premier mode de réalisation (préféré), le capot peut être métallique (aluminium), ou plastique métallisé (ou autre couche réflectrice de lumière), collée (adhésif double face, colle) ou contre la face externe (typiquement sur au plus une largeur de 15mm à partir du bord d'injection) en créant une surépaisseur d'au plus 1,5mm et même d'au plus 1mm ou même d'au plus 0,5mm. En effet, il ne faut pas trop écarter le profilé d'encadrement du premier vitrage.

Le capot est de préférence d'épaisseur d'au plus 250µm et même 100µm 50µm.

Le capot peut être souple, le support de source (diodes de préférence) est alors de préférence contre la pièce de fond ou la pièce de fixation.

Le capot et la pièce de fond et même la pièce de fixation peuvent former une pièce monolithique de préférence métallique.

Le capot peut être métallique ou plastique de préférence métallisé (ou autre couche réflectrice de lumière), notamment adhésivé à une ou aux extrémités ou sur toute la surface, avec une partie collée à la face externe en créant surépaisseur d'au plus 1mm et même d'au plus 0,5m ou d'au plus 0,2 mm (double face ou colle), s'étendant pour former la pièce de fond collée ou contre la pièce de fixation. La pièce de fond est de préférence collée ou contre la pièce de fixation ou la pièce de fond est espacée de la pièce de fixation et s'étend pour être contre ou collée au deuxième vitrage.

Et la deuxième tranche peut être en saillie du support de source ou de la fibre optique directement sur la pièce de fond, saillie côté opposé au bord d'injection

Le capot peut prolonger la pièce de fond alors coudée, l'ensemble pièce de fixation-pièce de fond-capot étant une pièce monolithique métallique l'extrémité du capot étant contre la première face avec ou sans moyen de fixation (adhésif etc). On préfère que Ep4 est d'au moins 1mm mieux d'au moins 1,5mm (protection mécanique) et le capot créant une surépaisseur d'au plus 1mm sur la face externe. Il peut s'agir d'une pièce extrudée.

Le capot peut prolonger la pièce de fond alors coudée, l'ensemble pièce de fixation-pièce de fond-capot étant une pièce monolithique métallique, l'extrémité du capot (bordure de sa face principale coté vitrage) de préférence contre (apposée) la face externe (généralement la première face) -avec ou sans adhésif ou tout moyen de fixation pour faciliter sa mise en place. La source et/ou le support de source sont alors montés (par glissement) via une extrémité latérale (ouverte) de la cavité débouchante de la source.

De préférence, on prévoit l'une au moins des caractéristiques suivantes :
- l'ensemble pièce de fixation-pièce de fond-capot éventuel est associé au vitrage isolant sans créer de pont thermique,
- l'ensemble pièce de fixation-pièce de fond-capot éventuel est un réflecteur, métallique ou métallisé,
- il y a un autre bord d'injection (d'autres sources et pièces de fixation et de fond et même un capot) à l'opposé du bord d'injection de préférence sur un bord de la première feuille (si premier vitrage feuilleté).

De préférence on éclaire au moins sur un bord longitudinal (vertical pour porte d'enceinte classique) et en fonction de la largeur du vitrage sur le bord opposé.Bien sûr on peut dupliquer les moyens et prévoir de manière similaire ou identique ainsi des deuxième pièce de fixation, deuxième pièce de fond, deuxième capot, deuxième support de source, deuxième source de lumière, pour un éclairage par injection de lumière
- dans le bord de la première feuille adjacent au bord d'injection (bord latéral par exemple)
- dans le bord de la première feuille opposé au bord d'injection (bord longitudinal par exemple)

On peut même prévoir l'ensemble de ces moyens sur chaque bord de la première feuille.

Bien sûr on peut dupliquer les moyens et prévoir de manière similaire ou identique ainsi des deuxième pièce de fixation- deuxième pièce de fond- deuxième capot - deuxième support de source- deuxième source de lumière pour un éclairage par injection de lumière dans le bord de la deuxième feuille adjacent au bord d'injection - dans le bord de la première feuille opposé au bord d'injection (bord longitudinal par exemple).

La deuxième pièce de fixation peut être accolée à la première qui est alors réduite en largeur en conséquence par exemple de moitié pour que les deux soient un iquement en regard du premier joint.

Alternativement la deuxième pièce de fixation est confondue avec la pièce de fixation.

Au cas où (pour ajout futur de diodes), le profilé de fixation peut comporter une extension latérale côté deuxième face identique ou similaire (moins large si feuille de verre moins épaisse par exemple) à l'opposé de la pièce de fond, l'ensemble étant monolitique avec pièce de fixation formant le corps central de préférence de section rectangulaire et la pièce de fond et l'extension deux ailes symétriques notamment en méplat de section rectangulaire ou encore en L (retour vers la face interne du vitrage).

Dans la présente invention, le terme collage implique une colle ou un ruban adhésif double face; le terme colle lui ne couvre pas un ruban adhésif double face.

De préférence, l'ensemble vitré comprend un profilé d'encadrement comportant un montant d'encadrement, en regard du bord d'injection et sur au moins la face interne ou la face externe fixé au vitrage isolant par collage de préférence par une colle dite de montage (plutôt qu'un adhésif double face au moins sur les deux verres). Et ainsi de préférence il est en contact adhésif par la colle avec la pièce de fixation (face arrière), et même en contact adhésif par la colle avec la pièce de fond (face arrière) et le capot (face arrière).

La colle de montage éventuelle est absente de l'espace entre la source de lumière et le bord d'injection (dans la cavité logeant le support de source et de la source).

Le profilé d'encadrement est de préférence associé au vitrage isolant sans créer de pont thermique. On préfère qu'il ait une partie métallique sur la face externe.

Le montant d'encadrement comprend de préférence:
- une première partie (coudée, section en L ...) notamment métallique, en regard du bord d'injection et dépassant sur la face externe, collé à la face externe et de préférence collée à la pièce de fixation,-qui décalée du deuxième vitrage (pas en regard)-
- et une deuxième partie notamment isolante thermique, de préférence polymérique, solidaire par des moyens de collage avec la première partie, en regard de la deuxième tranche adjacente au bord d'injection et dépassant éventuellement sur la face interne (collé à la face interne).

L'une des parties est métallique (de préférence première partie, coté usager) l'autre étant isolante thermique de préférence polymérique de préférence deuxième partie, coté enceinte).

La première ou deuxième partie peut avoir une zone creuse.

Dans un mode de réalisation avantageux, la deuxième tranche est dépassante du bord d'injection et de préférence en saillie du support de source ou de la fibre optique directement sur la pièce de fond, saillie côté opposé au bord d'injection, le montant d'encadrement ne comporte par un retour sur la face interne, notamment est de section en L, et la face interne comporte des moyens de masquage du premier joint (et de l'espaceur, généralement métallique, accolé), moyens de masquage de préférence en matière minérale, comme un émail, de densité optique d'au moins 2 et même d'au moins 2,5.

Le profilé d'encadrement peut être un cadre de préférence en plusieurs pièces (coudées, aboutées notamment aux coins du vitrage isolant, en biseau..)

Le profilé d'encadrement peut en outre comporter, de préférence le montant horizontal, notamment sur un montant d'un bord adjacent au bord d'injection (de préférence bord d'injection longitudinal et vertical quand monté et bord adjacent horizontal et haut quand monté) un évidement capoté par une couverture (pièce par exemple plate) étanche trouée et avec des moyens d'étanchéité (aux infiltrations si condensation sur la porte vitrée), l'ensemble permettant de préférence le passage de fils d'alimentation électrique de la source, le capot et/ou les moyens d'étanchéité (joint etc) étant amovible et formant trappe d'accès à la source, -sans présence de colle de montage entre cette trappe et la source logée dans la cavité débouchante latéralement, sans contact adhésif ou au moins fixation permanente)-.

L'évidement et le trou sont dimensionnés pour pouvoir sortir la source et de préférence son support de source comme la carte de circuit imprimé distinct de la pièce de fond.

La source est par exemple retirable par l'aide desdits fils latéralement à la cavité.

La couverture peut être une pièce fixée, par collage de préférence, sur le profilé d'encadrement et comportant en outre un pivot (pour une porte ouvrante vers l'extérieur de l'enceinte)

Le profilé peut être de préférence collé par une colle au vitrage isolant et la colle est absente entre la trappe d'accès et l'extrémité latérale la plus proche de la cavité débouchante.

Si la porte est un couvercle de coffre réfrigéré en particulier, les vitrages peuvent être bombés aussi on préfère que le profilé d'encadrement soit en matière flexible pour s'adapter aux courbures.

L'invention porte naturellement aussi sur une porte de meuble réfrigéré professionnel (froid positif, froide négatif) comportant un ensemble vitré lumineux tel que décrit précédemment et sur l'enceinte réfrigérée avec une telle porte.

De préférence le bord d'injection est le bord longitudinal, et vertical après installation de la porte, l'évidement est sur un montant d'encadrement en regard d'un bord latéral et supérieur après installation de la porte. La porte est de préférence ouvrante (vers extérieur de l'enceinte) et comporte pour ce faire un pivot sur le haut du profilé d'encadrement supérieur.

L'enceinte peut comprendre deux portes vitrées ou plus.

Naturellement le vitrage isolant peut comprendre comme couche à fonction thermique:
- une couche anti givre,
- et/ou une couche bassse émissive ou « low E » (empilement à l'argent, de préférence une seule couche d'argent), de préférence sur la deuxième face dans une version double vitrage (premier vitrage feuilleté ou non, deuxième vitrage simple de préférence) ou triple vitrage et même sur la face interne pour le triple vitrage
- et/ou une couche chauffante, sur la face interne pour le triple vitrage

A partir d'une cavité de largeur donnée (distance pièce de fond et bord d'injection prédéterminé) l'invention permet un bon positionnement de la diode par rapport à la zone d'injection de la lumière.

La face ou zone émettrice (pour la diode, de préférence puce avec sa préencapsulation - type silicone etc) peut approcher de manière contrôlée le plus proche possible du bord d'injection sans risque.

De préférence, le positionnement du support de source (et de préférence du capot porteur ou non du support) ne se fait pas sous contrainte car cela implique une déformation trop importante et ainsi ne permet pas de contrôle précis de la position : il n'y a pas une position unique possible, mais plusieurs.

De préférence on évite tout système adhésif (colle) même réversible ainsi que tout montage en force du support de source.

Le support de diodes au moins (voire les puces) est pourvu, avantageusement avant son intégration dans le vitrage (lors de leur fabrication...), d'au moins une couche de protection mono ou multicouche) contre l'humidité et/ou d'une encapsulation telle qu'un vernis de type silicone, époxy ou acrylique.

Plus précisément, la couche de protection protège au moins circuit imprimé, soudures, connecteurs si pas étanches.

Les diodes (au moins la face émettrice) sont de préférence pas protégées ainsi si déjà recouvertes (pré encapsulées) de silicone.

On protège les barrettes de LEDs avant de les intégrer dans le logement). La protection peut être du type vernis de protection (silicone, epoxy, acrylique...), encapsulation ou « potting » de la barrette de LEDs (silicone, epoxy, acrylique...).

On peut citer les vernis de tropicalisation vendu par Syneo, avec une base acrylique ou PU ou Silicone et couche de 3M « Novec Electronic coating EGC 1700 ».

On peut citer le vernis de protection Abchimie. La dépose est par immersion, dépose sélective ou vaporisation (couches de 25-50 microns).

De préférence, la distance entre la face émettrice ou zone émettrice (espacée ou non de la tranche) et la tranche d'injection peut être inférieure à 2 mm,

Les diodes peuvent être (pré) encapsulées, c'est-à-dire comprenant une puce semi-conductrice et une enveloppe, par exemple en résine type époxy ou en PMMA, encapsulant la puce et dont les fonctions sont isolants : élément diffusant ou de focalisation, conversion de longueur d'onde. L'enveloppe est commune ou individuelle.

Les diodes peuvent être de préférence simples puces semi-conductrices par exemple de taille de l'ordre de la centaine de µm ou du mm.

Les diodes peuvent éventuellement comprendre une enveloppe protectrice (provisoire ou non) pour protéger la puce lors de manipulations ou pour améliorer la compatibilité entre les matériaux de la puce et d'autres matériaux.

La diode peut être choisie notamment parmi au moins l'une des diodes électroluminescentes suivantes :
- une diode à émission latérale, c'est-à-dire parallèlement aux (faces de) contacts électriques, avec une face émettrice latérale par rapport au support,
- une diode dont la direction principale d'émission est perpendiculaire ou oblique par rapport la face émettrice de la puce.

Le profilé support de diodes peut être un PCB classique ou être métallique

Le profilé support de diodes peut avoir une section rectangulaire.

Le nombre total de diodes, la puissance des diodes sont choisies par la taille et la localisation des zones à éclairer, par l'intensité lumineuse souhaitée et l'homogénéité de lumière requise.

La longueur du profilé support de diodes varie en fonction du nombre de diodes et de l'étendue de la surface à éclairer.

De préférence, le facteur de transmission de la première feuille autour du pic du rayonnement des puces (perpendiculairement aux faces principales) est supérieur ou égal à 50%, encore plus préférentiellement supérieur ou égal à 70%, et même supérieur ou égal à 80%.

On peut prévoir de préférence pour le ou les bords de couplage de la première feuille des bords arrondis. En particulier dans le cas où l'espace des rayonnements émis est de l'air, il est possible de tirer parti de la réfraction au niveau de l'interface air/première feuille de géométrie appropriée (bord arrondi, voire même biseauté...) permettant ainsi de focaliser les rayons dans la première feuille.

Le verre peut avoir éventuellement préalablement subi un traitement thermique du type durcissement, recuit, trempe, bombage.

On peut découper le bord de la première feuille (détourage avec évidements avant trempage) d'un vitrage isolant pour y loger les diodes.

Les premières et/ou deuxième feuilles peuvent être de toute forme (rectangulaire, carré, rond, ovale,...), et être planes ou galbées.

La première feuille peut être préférentiellement en verre sodocalcique, par exemple en verre PLANILUX de la société SAINT GOBAIN GLASS.

Les moyens d'extraction de la lumière guidée via la première et/ou la deuxième face principale, sont des moyens de diffusion en surface de la première et/ou de la deuxième face principale ou des moyens de diffusion en volume dans la première feuille.

Pour l'extraction de la lumière on emploie des moyens de diffusion, formés soit par un traitement superficiel de la feuille de verre du type sablage, attaque acide, dépôt d'émail ou de pâte diffusante, soit par un traitement dans la masse du verre de type gravure laser.

Les particules diffusantes peuvent être choisies parmi des particules semi-transparentes et de préférence des particules minérales telles que des oxydes, des nitrures, des carbures. Les particules seront de préférence choisies parmi les oxydes de silice, d'alumine, de zircone, de titane, de cérium, ou d'un mélange d'au moins deux de ces oxydes.

Par exemple, on choisit une couche minérale diffusante d'environ 10 µm.

La distance de la face émettrice et de la première feuille peut être inférieure à 2 mm. Notamment, on peut utiliser des diodes d'encombrement réduit par exemple des puces sans lentille et/ou sans pré-encapsulation notamment de largeur de l'ordre de 1 mm, de longueur de l'ordre de 2,8 mm, de hauteur de l'ordre de 1,5 mm.

La ou les zones lumineuses, notamment sont périphériques, en bande(s) encadrant le vitrage.

La lumière peut être :
- continue et/ou par intermittence,
- monochromatique et/ou plurichromatique.

Comme motifs décoratifs, on peut former par exemple une ou des bandes lumineuses, un cadre lumineux périphérique.

Un produit (intermédiaire) correspondant à l'ensemble vitré lumineux selon l'invention sans les moyens d'extraction de lumière peut être vendu à l'utilisateur ou client final lequel peut lui-même réaliser les moyens d'extraction de lumière, notamment effaçables ou amovibles par exemple par un sticker ou encore un stylo marqueur adapté.L'invention porte aussi sur un procédé de fabrication d'un ensemble vitré lumineux tel que décrit précédemment dans lequel on fixe la pièce de fixation sur le premier joint encore à l'état collant (premier mode de fabrication) ou dans lequel on colle la pièce de fixation sur la deuxième face (de préférence) et/ou sur un intercalaire entre la deuxième face et troisième face et on applique le premier joint qui vient alors en contact avec la pièce de fixation (et l'intercalaire, la troisième face ).

Le procédé de fabrication ((premier mode de fabrication) peut comporter les étapes suivantes dans cet ordre, après que l'on fixe la pièce de fixation sur le premier joint encore à l'état collant :
- on forme une cavité délimitée par le bord d'injection, la pièce de fixation et la pièce de fond formant un décrochement latéral de la pièce de fixation, cavité le long du bord d'injection et débouchante latéralement,
- on loge la source de lumière et le support de source dans la cavité,
- on ferme par un capot la cavité suivant la direction longitudinale du bord d'injection la cavité restant débouchante latéralement
- on monte le profilé d'encadrement au vitrage isolant par collage, avec de la colle ou un double face, incluant le montant d'encadrement en regard du bord d'injection.

Le procédé de fabrication (premier mode de fabrication) peut aussi comporter les étapes suivantes dans cet ordre, après que l'on fixe la pièce de fixation sur le premier joint encore à l'état collant :
- on forme une cavité délimitée par le bord d'injection, la pièce de fixation et la pièce de fond formant un décrochement latéral de la pièce de fixation et un capot qui est un extension de la pièce de fond, cavité le long du bord d'injection et débouchante latéralement,
- on loge la source de lumière et le support de source dans la cavité,
- on monte le profilé d'encadrement au vitrage isolant par collage, avec de la colle ou un double face, incluant le montant d'encadrement en regard du bord d'injection.

Le procédé de fabrication (deuxième mode de fabrication) peut comporter les étapes suivantes dans cet ordre :
- on place une cale notamment en matière anti adhérente (téflon ou polytétrafluoroéthylène) contre le bord d'injection et plus longue que le bord d'injection
- au moins une pièce de préférence métallique formant capot, pièce de fond et pièce de fixation, entoure la cale en étant adhésivée(s) à la face externe et à la deuxième face et/ou l'intercalaire
- ladite application du joint
et de préférence :
- le montage d'un profilé d'encadrement au vitrage isolant par collage, avec (de préférence) de la colle dite de montage voire un adhésif double face, incluant un montant d'encadrement en regard du bord d'injection, collé à la pièce de fond
- le retrait de la cale laissant une cavité ouverte latéralement
- on loge la source de lumière et le support de source dans la cavité.

Mieux, pour le démontage, (on s'arrange pour que ) la colle de montage du profilé éventuelle est absente au moins entre le montant d'encadrement et l'extrémité latérale de la cavité, et le profilé d'encadrement comportant un évidement capoté par une couverture étanche et avec des moyens d'étanchéité, la couverture et/ou les moyens d'étanchéité étant amovibles et formant trappe d'accès à la source et l'ensemble permettant de préférence le passage de fils d'alimentation électrique de la source,
- on retire la couverture et/ou les moyens d'étanchéité,
- on retire la source par l'extrémité latérale de la cavité.

L'évidement est de préférence dans ledit montant adjacent au montant en regard du bord d'injection.

La pièce de fixation et/ou la pièce de fond ou encore la deuxième tranche peut protéger la source de lumière d'un désalignement et/ou d'un écrasement contre le bord d'injection.

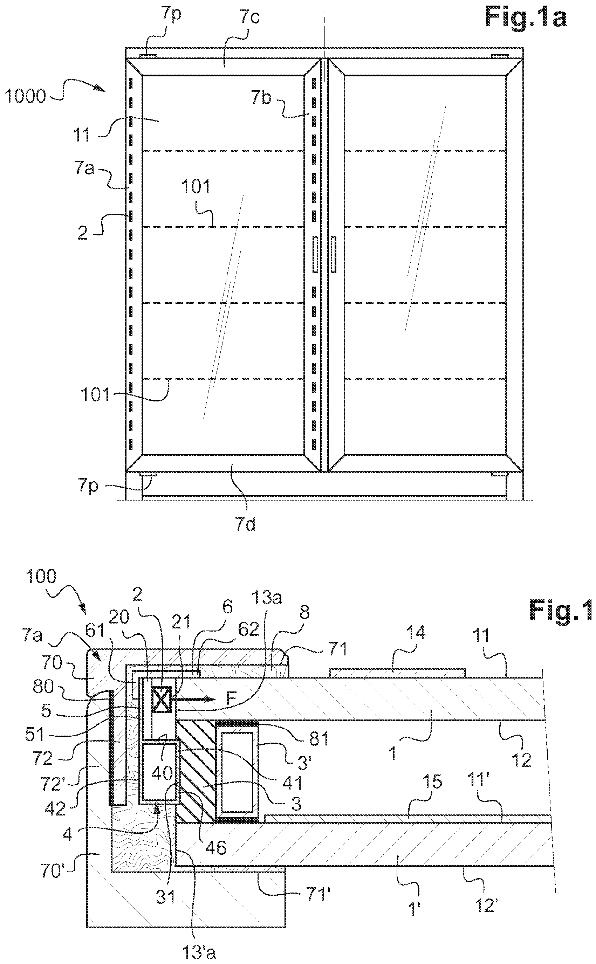

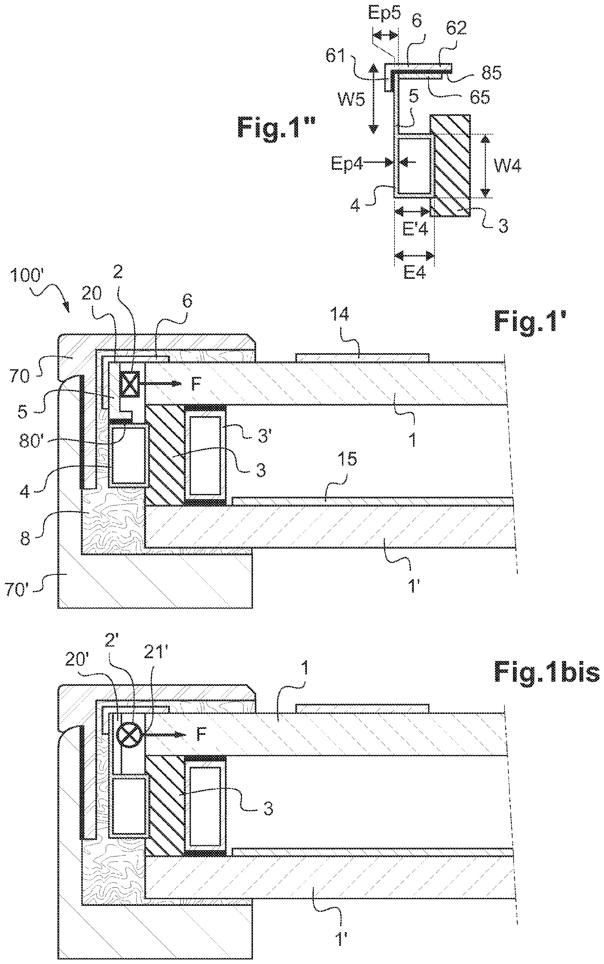

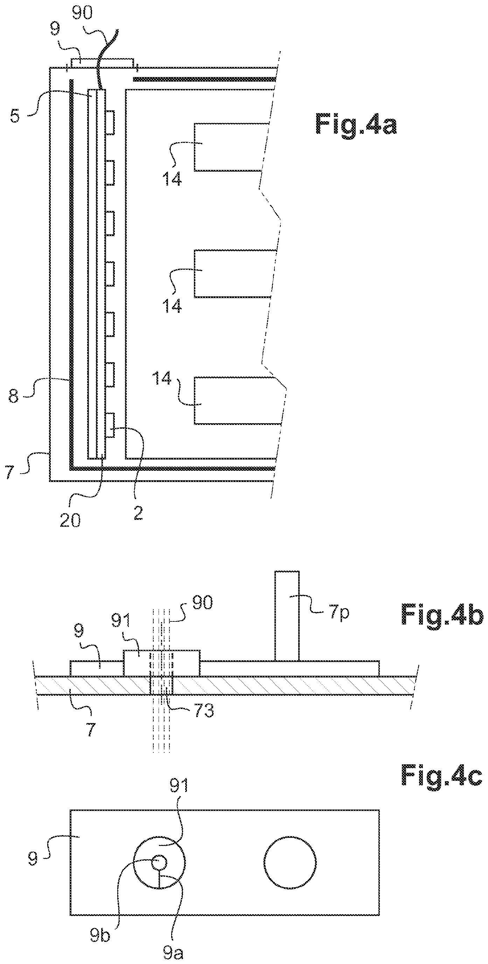

D'autres détails et caractéristiques avantageuses de l'invention apparaissent à la lecture des exemples de vitrages selon l'invention illustrés par les figures suivantes :
▪ La figure 1a montre une enceinte réfrigérée lumineuse
▪ Les figures 1, 1', 1bis, 2, 2', 2", 3, 3a, 3b, 3c, 3d, 3', 5a à 5g, 6, 7, 8, 9, 10, 11 représentent des vues schématiques et partielles de coupe transversale des portes vitrées lumineuses de meuble réfrigéré dans différents modes de réalisation de l'invention,
▪ la figure 1" est une vue de détail de la fixation du capot de fermeture longitudinale de la cavité utilisé en figure 1
▪ les figures 4a représente une vues schématique de face d'une porte vitrée lumineuse de meuble réfrigéré avec trappe d'accès de la source de lumière
▪ les figures 4b et 4c montre la trappe d'accès.

On précise que pour un souci de clarté les différents éléments des objets représentés ne sont pas nécessairement reproduits à l'échelle.

La figure 1a représente une vue schématique d'une enceinte réfrigérée 1000 dans un premier mode de réalisation de l'invention.

Cette enceinte est ici une armoire comportant des étagères 101 (en pointillés) et deux portes comportant chacune un vitrage isolant lumineux comportant une face principale externe 11 côté usager (visible ici) et une face principale interne (côté étagère) et une tranche avec quatre bords. Les bords longitudinaux de la tranche sont à la verticale. Un profilé d'encadrement est un cadre fixé en périphérie du vitrage isolant (double vitrage voire triple vitrage) rectangulaire. Le cadre comporte quatre montants aboutés aux coins du vitrage isolant. Les deux montants longitudinaux 7a et 7b sont identiques et verticaux. Deux montants latéraux 7c et 7d sont horizontaux. Deux sources de lumière (en pointillés car masquées) sont insérées respectivement entre le premier montant longitudinal 7a et un premier bord longitudinal 13a de tranche et entre le deuxième montant longitudinal 7b et un deuxième bord longitudinal de tranche.

Chaque porte est ouvrante vers l'extérieure grâce à un pivot 7p sur les montants supérieur et inférieur.

La figure 1 représente une vue schématique partielle de coupe d'une porte vitrée lumineuse de meuble réfrigéré 100 dans un premier mode de réalisation de l'invention.

Cette porte vitrée lumineuse 100 comprend un vitrage isolant avec une face principale externe 11 côté usager et une face principale interne (12' côté tablettes) comportant :
- un premier vitrage comportant la face externe et une première tranche formée de quatre bords dont un premier bord longitudinal 13a, premier vitrage ici simple comportant une première feuille en verre 1 présentant une première face principale 11 et une deuxième face principale 12, la première face étant donc la face externe, par exemple une feuille de verre silicosodocalcique et extraclair, d'épaisseur égale à au moins 3,8mm (4mm en ou 6mm standard),
- un deuxième vitrage comportant la face interne 12' et une deuxième tranche formée de quatre bords dont un deuxième bord longitudinal 13'a, deuxième vitrage ici simple comportant une deuxième feuille en verre 1', avec une troisième face 11' et une quatrième face principale 12' étant ici la face interne, les deuxième et troisième faces étant espacées par une première lame de gaz,
- en périphérie des deuxième et troisième faces un premier joint polymérique 3 en cadre et un intercalaire formant espaceur 3'.

Usuellement, l'intercalaire 3' est fixé à l'intérieur du vitrage par ses faces latérales aux faces 12 11' des feuilles de verre par du caoutchouc butyl 81 qui a également pour rôle de rendre étanche l'intérieur du vitrage isolant à la vapeur d'eau. L'intercalaire 3' est disposé en retrait à l'intérieur du vitrage et à proximité des bords longitudinaux des tranches desdites feuilles de verre, de façon à ménager une gorge périphérique dans laquelle sont injectés un premier joint polymérique 3 du type mastic, tel qu'en polysulfure ou polyuréthane. Le mastic confirme l'assemblage mécanique des deux feuilles de verre 1,1' et assure une étanchéité à l'eau liquide ou aux solvants.

Une source lumineuse 2 est externe au vitrage isolant. On préfère des diodes électroluminescentes 2 comportant chacune une puce semi-conductrice avec une face émettrice 21.

Les diodes sont couplées optiquement avec le premier bord longitudinal 13a, dit bord d'injection, pour une propagation de la lumière par réflexion totale interne dans l'épaisseur du premier vitrage, jouant alors le rôle de guide de la lumière. Les diodes sont sur une carte de circuit imprimé ou support PCB 20 et s'étendent en regard du premier bord (d'injection) 13a.

Le support PCB 20 est monolithique, mince, d'épaisseur égale à 1,8 mm large de 5mm. Il est un méplat (barrette) de section rectangulaire, « FR4 » ou métallique. Le support PCB 20 ne dépasse pas de la première tranche en direction de la face externe et, est ici sur un métal pour la dissipation thermique.

Les diodes électroluminescentes comportant chacune une puce émettrice apte à émettre un ou plusieurs rayonnements dans le visible guidé(s) dans la première feuille 1. Les diodes sont de petites tailles typiquement quelques mm ou moins, classiquement d'épaisseur d'au plus 2mm, notamment de l'ordre de 2x2x1 mm. Les diodes sont avec ou sans optique (lentille), non pré-encapsulées pour réduire au maximum l'encombrement ou encapsulée par exemple un simple vernis. Les faces émettrices sont de préférence espacées du bord d'injection et sans contact adhésif mais peuvent être préenscapulées et collées par une colle ou un scotch optique double face de préférence d'épaisseur d'au plus 0,5mm. On peut choisir des diodes émettant en lumière blanche ou colorée

On réduit au maximum la distance entre la face émettrice et la tranche d'injection, par exemple de 5mm, mieux de 0,2 à 2mm. La direction principale d'émission est perpendiculaire à la face de la puce semi-conductrice, par exemple avec une couche active à multi puits quantique, de technologie AlInGaP ou autres semi-conducteurs. Le cône de lumière est un cône de type lambertien, de +/-60°. Dans la configuration illustrée, la face émettrice 21 de la puce est perpendiculaire au PCB 20.

L'extraction de la lumière 12' se fait par exemple via la face externe 11. L'extraction 14' est réalisée par tout moyen de diffusion à la surface: sablage, attaque acide, couche diffusante comme un émail blanc... ou en variante par gravure laser dans la première feuille 1. Le motif lumineux peut être à visée commerciale, signalétique....

Le deuxième vitrage 1' comporte une première couche à fonction thermique 15, sur la troisième face 11'.

Le support PCB 20 et la source de lumière 2 sont dans une cavité délimitée par le bord d'injection 13a, une pièce dite de fixation 4, une pièce de fond 5, et fermée par un capot 6 longitudinalement. Cette cavité allongée est débouchante latéralement.

La pièce de fixation 4 est un profilé métallique, ici une tôle -extrudée ou pliée-en aluminium d'épaisseur Ep4 de 1,5mm formant une pièce creuse de section rectangulaire d'épaisseur E4 de 7mm . Ce profilé 4 est monté sur le mastic 3 encore à l'état collant (le vitrage étant généralement à l'horizontale) si bien que le bord externe du mastic 31 est en contact adhésif direct avec la pièce de fixation, qui peut s'enfoncer typiquement de 1 à 3mm dans le mastic 3 ou même plus. L'épaisseur saillante E'4 est donc par exemple de 5mm. La pièce de fixation 4 ne touche pas à la fois premier et deuxième vitrages pour ne pas former un pont thermique. Elle peut être notamment espacée de 2mm de la deuxième face 12 pour que le support de source ne dépasse pas vers la face externe.

La pièce de fixation 4 peut protéger la source de lumière 2 d'un désalignement et/ou d'un écrasement contre le bord d'injection, saillie côté opposé au bord d'injection par sa partie arrière plane 42.

La pièce de fond 5 est quant à elle en regard et espacée du bord d'injection, il s'agit ici d'un décrochement latéral de la pièce de fixation donc est un méplat d'épaisseur Ep5 de 1,5mm dans le prolongement de la paroi arrière plane 42. La tôle en aluminium pliée ou extrudée pour former pièce de fixation et pièce de fond. Les dimensions de la pièce de fixation et de la pièce de fond sont montrées en figure 1".

La pièce de fond 5 pourrait même être coudée en direction du bord d'injection sans le toucher ou en le touchant (si la pièce de fixation 4 ne touche pas le deuxième vitrage de préférence) si les diodes sur support PCB sont montées par glissement via extrémité latéral de la cavité ouverte.

Le vitrage comporte en outre un capot 6 de fermeture de la cavité, fermeture suivant la direction longitudinale du bord d'injection 13a.

Le capot est une feuille 6 métallique adhésivée de 50 à 100µm d'épaisseur avec une partie 62 collée la face externe 11 en créant une infime surépaisseur d'au plus 1mm et une partie 61 collée à la pièce de fond 5 via sa face arrière.

On peut citer par exemple une feuille aluminium collée par adhésif double face ou encore un ruban métallique avec un adhésif sur sa face côté bord d'injection. Par exemple le ruban métallique (montré en figure 1") comporte sur cette face un adhésif 85 qui est couvert par un film 65 de protection (lining en anglais) sauf dans les zones pour le collage avec la face 11 et la pièce de fond 5.Il s'agit par exemple simplement de découper le film de protection vendu avec le ruban métallique adhésif.

Pour insérer des diodes après capotage ou les changer il n'est pas nécessaire de devoir démonter le capot 6 car on peut insérer ou sortir les diodes sur leur support PCB (ou une fibre optique 2' sur son support 20' comme montré en figure 1 bis) latéralement de préférence par le haut de la porte. On peut aussi insérer les diodes avant capotage.

Aussi le support PCB 20 et les diodes 2 dessus sont insérées dans la cavité contre la pièce de fond, contact non adhésif avec la pièce de fond métallique ou la pièce de fixation métallique et même sans fixation qui empêcherait son retrait éventuel souhaité, latéralement. Un contact formant fixation magnétique est possible. Un éventuel léger espace entre diodes et le bord d'injection est possible s'il ne perturbe pas l'alignement optique. La pièce de fond 5 forme dissipateur thermique.

On évite de préférence un montage en force et même en liaison serrée.

L'ensemble pièce de fixation-pièce de fond-capot est associé au vitrage isolant sans créer de pont thermique. Eventuellement le capot, la pièce de fixation réfléchissent la lumière latérale pour en diriger une partie vers le bord d'injection.

La porte vitrée 100 comprend en outre un profilé d'encadrement fixé au vitrage isolant de préférence par une colle dite de montage 8 et masquant premier joint 3 et intercalaire 3'. Il comporte un montant d'encadrement 7a longitudinal (vertical sur la porte montée) longeant le bord d'injection 13a fixé au vitrage isolant par la colle de montage 8, ainsi ici en contact adhésif par la colle avec la pièce de fixation, la pièce de fond, le capot, la colle de montage 8 étant absente de l'espace entre la source de lumière et le bord d'injection et mieux de l'espace entre l'extrémité de la cavité ouverte latéralement (supérieure sur la porte montée) pour ménager son accès (comme détaillé plus tard).

Le montant d'encadrement 7a est en deux parties pour éviter le pont thermique (si métallique). Une première partie métallique 70 est coudée par exemple profilé de section en L, pour être en regard du bord d'injection () et dépasser sur la face externe :
- avec une partie 71 collée à la face externe et à une partie (plane) du capot servant à la fermeture de la cavité,
- avec une partie 72 en regard de la tranche du vitrage isolant (et décalée du bord 13'a du deuxième vitrage), collée à une autre partie du capot 61, à la pièce de fond (face arrière 51), à la pièce de fixation (partie plane arrière 42)

La deuxième partie 70' est isolante thermique, de préférence polymérique solidaire par une colle 80 avec la première partie, coudée, pour être en regard de la deuxième tranche 13'a adjacente au bord d'injection et dépassant sur la face interne 12'.

Le montage du profilé d'encadrement se fait de préférence à l'horizontale, avec capot de fermeture de la partie haute de la cavité.

La figure 1' montre en variante et en vue de détail de porte 100' une pièce de fond 5 et de fixation 4 en deux pièces solidaires, avec une pièce de fond 5 en L avec une partie courte du L collée par un adhésif double face 80' à une partie latérale 40 de la pièce de fixation 4.

La figure 2 représente une vue schématique partielle de coupe transversale d'une porte vitrée lumineuse de meuble réfrigéré 200 dans un deuxième mode de réalisation de l'invention.

La porte 200 diffère de la porte 100 par le choix de diodes à émission latérale avec face émettrice parallèle au support PCB 20, et donc la position du support PCB 20 qui est ici contre la partie latérale 40 de la pièce de fixation métallique (fond de la cavité). La pièce de fixation peut toucher la face 12 du premier vitrage (deuxième face) par exemple pour centrer (rehausser) les diodes au milieu du verre de guidage 1. Sinon on adapte l'épaisseur du PCB par exemple.

Si la pièce de fixation 4 devient un plastique on peut intercaler une pièce métallique.

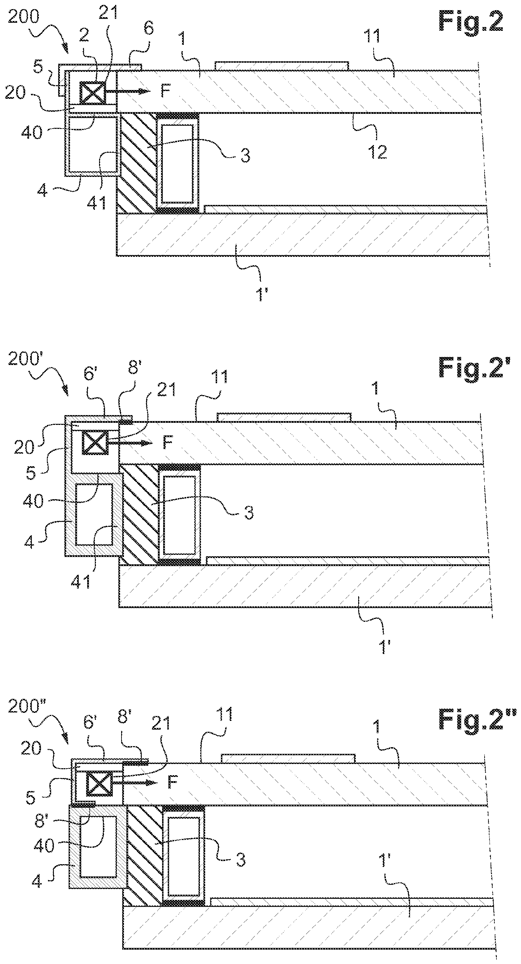

La figure 2' représente une vue schématique partielle de coupe transversale d'une porte vitrée lumineuse de meuble réfrigéré 200' dans une variante du deuxième mode de réalisation de l'invention.

La porte 200' diffère de la porte 100 par le choix de diodes à émission latérale avec face émettrice 21 parallèle au support PCB 20, et donc la position du support PCB 20 qui est fixé (démontable ou pas latéralement) sur le capot 6' de fermeture de la cavité qui est ici une extension de la pièce de fond monolithique avec la pièce de fixation 4 (métallique comme une tôle d'aluminium) d'épaisseur Ep4 conservée à d'au plus 1,5mm. L'épaisseur du capot Ep6 (voire de la pièce de fond 5) peut même être d'au plus 1mm et même d'au plus 0,8mm pour ne pas créer de surépaisseur sur la face externe 11. La pièce monolithique est par exemple un extrudat. La pièce formant capot 6' est collée avec une colle 8' à la face externe 11.

Alternativement le support PCB est contre la pièce de fixation ou on conserve les diodes à émission latérale avec le support PCB contre la pièce de fixation 3. Cela évite de devoir fixer le support PCB.

Si on réduit l'épaisseur de la pièce monolithique formant pièce de fond et de fixation et capot sous 1mm on préfère que le deuxième vitrage soit dépassant pour protéger les diodes lors de leur insertion avant installation du montant d'encadrement dans un premier mode de fabrication.

La figure 2" représente une vue schématique partielle de coupe transversale d'une porte vitrée lumineuse de meuble réfrigéré 200" dans une autre variante du deuxième mode de réalisation de l'invention.

La porte 200' diffère de la porte 100 par le choix de diodes à émission latérale avec face émettrice 21 parallèle au support PCB 20, et donc la position du support PCB 20 qui est fixé (démontable ou pas latéralement) sur le capot 6' de fermeture de la cavité qui est ici une extension de la pièce de fond 5. L'épaisseur du capot Ep6 (voire de la pièce de fond 5) est d'au plus 1mm et même d'au plus 0,8mm pour ne pas créer de surépaisseur sur la face externe 11. La pièce monolithique capot pièce de fond est par exemple un extrudat.

La pièce de fond 5 est distincte de la pièce de fixation 4 et est fixée par collage 8' par un retour sur la face latérale 40 La pièce formant capot 6' est collée avec une colle 8' à la face externe 11.

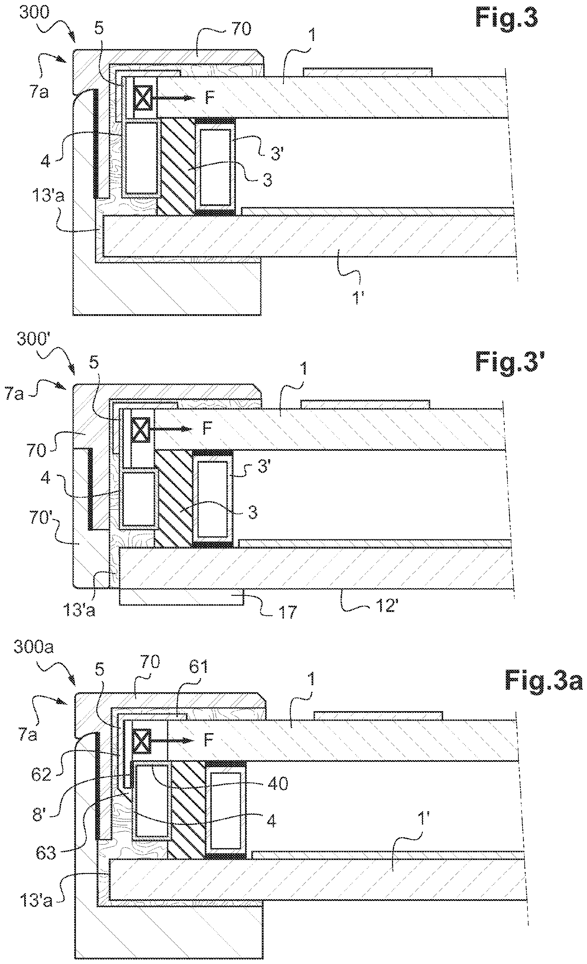

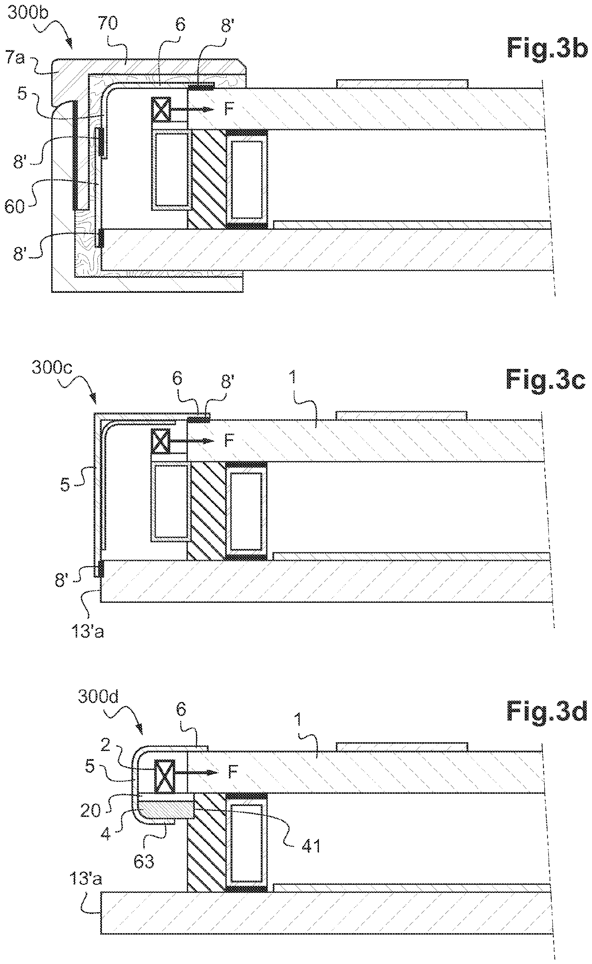

La figure 3 représente une vue schématique partielle de coupe transversale d'une porte vitrée lumineuse de meuble réfrigéré 300 dans un troisième mode de réalisation de l'invention.

La porte 300 diffère de la porte 100 par les dimensions du deuxième vitrage 1' dont la deuxième tranche 13'a dépassante du bord d'injection 13a est en saillie du support de source 20,et même de la pièce de fixation 4 et la pièce de fond 5, et du capot en face arrière de la pièce de fond saillie côté opposé au bord d'injection protégeant la source de lumière notamment d'un désalignement et/ou d'un écrasement contre le bord d'injection.

La deuxième tranche est plus proche de la partie polymérique du profilé d'encadrement 7a

Il peut être en saille de l'arrière de la pièce de fixation de 1mm et d'au plus 3mm par exemple pour ne pas créer de surépaisseur de vitrage.

La figure 3' représente une vue schématique partielle de coupe transversale d'une porte vitrée lumineuse de meuble réfrigéré 300' dans une variante du troisième mode de réalisation de l'invention.

La porte 300' diffère de la porte 300 par la section du montant d'encadrement 7 qui ne comporte par un retour sur la face interne 12', notamment est de section en L. Et la face interne 12 comporte des moyens de masquage 17 du premier joint 3 et de l'intercalaire 3'à savoir un émail suffisamment opaque par exemple noir ou blanc de densité optique égal à 3.

Une solution mixte consiste à ne faire dépasser le profilé 70' que sur une faible distance ne masquant pas la totalité des moyens 3 et 3' périphériques, les moyens de masquage par dépôt de couche venant compléter le masquage.

La figure 3a représente une vue schématique partielle de coupe transversale d'une porte vitrée lumineuse de meuble réfrigéré 300a dans une variante du troisième mode de réalisation de l'invention.

La porte 300a diffère de la porte 300 par le capot qui s'étend pour former la pièce de fond 5, 62 et avec une partie 63 s'étendant même jusqu'à se fixer sur la face arrière 42 de la pièce de fixation.

Le support PCB est donc prémonté sur la face arrière de la pièce de fixation

Dans une variante démontable, le support PCB est contre la face latérale 42 et le capot est en contact par sa tranche au support de préférence contact non adhésif. On choisit alors une équerre plastique (avec réflecteur interne) fixée face arrière 40 de la pièce de fixation

La figure 3b représente une vue schématique partielle de coupe transversale d'une porte vitrée lumineuse de meuble réfrigéré 300b dans une variante du troisième mode de réalisation de l'invention.

La porte 300b diffère de la porte 300a précédente par le capot 6 dont la partie métallique qui s'étend pour former pièce de fond 5 est espacée de la pièce de fixation et du support de source posé sur la partie latérale de la pièce de fixation. Cette feuille métallique est en contact adhésif (par une colle 8' ou double face) avec une feuille plastique allant se fixer par collage (colle 8' ou double face) sur la tranche 13'a du deuxième vitrage 1'.

La figure 3c représente une vue schématique partielle de coupe transversale d'une porte vitrée lumineuse de meuble réfrigéré 300b dans une variante du troisième mode de réalisation de l'invention.

La porte 300b diffère de la porte 300a précédente par une pièce plastique avec film réfléchissant en surface (sauf extrémités) formant une équerre collée à la face externe 11 par exemple par un double face 8' et à la tranche 13'a du deuxième vitrage 1' par exemple pa un double face 8'.

La figure 3d représente une vue schématique partielle de coupe transversale d'une porte vitrée lumineuse de meuble réfrigéré 300b dans une variante du troisième mode de réalisation de l'invention.

La porte 300b diffère de la porte 300d précédente du fait que le support de source est en contact adhésif direct dans le mastic 3 comme la pièce de fixation métallique ici un profilé de section rectangulaire. Le capot 6 est une feuille métallique adhésivée partant de la face externe 11 jusqu'à la face latérale 43 opposée à la face 40. Comme en figure 1", il peut comporter un film de protection coté cavité. En variante, le support de source est démontable donc n'est pas collé au premier joint.

La figure 4a représente une vue schématique partielle de face d'une porte vitrée lumineuse de meuble réfrigéré 100" dans une variante du premier mode de réalisation de l'invention avec une trappe d'accès des diodes sur leur support PCB.

Le profilé d'encadrement comporte un évidement 73 capoté par une pièce de couverture 9 trouée rendue étanche avec des moyens d'étanchéité comme un joint 91 détaillés en figures 4b (vue de coupe) et 4c (vue de dessus). Ici, le joint 91 est percé au centre (orifice 9b) permettant le passage de fils d'alimentation électrique 90 de la source et radialement (orifice 9a) pour retirer les fils. Le joint est aussi amovible et formant un trappe d'accès à la sourceLa couverture 9 est par exemple collée au montant d'encadrement supérieur (horizontal) et peut comporter aussi un pivot 7p.

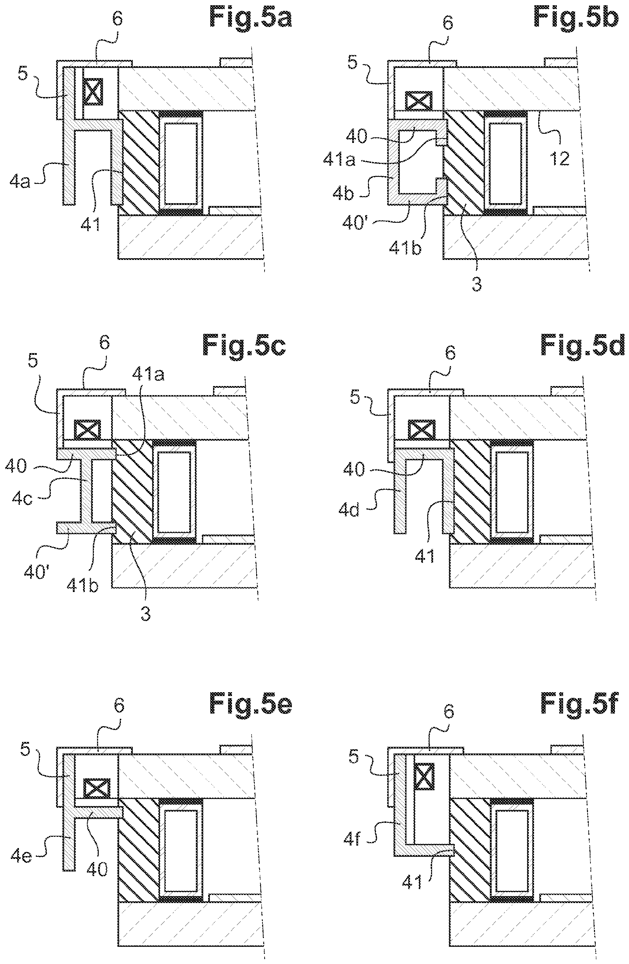

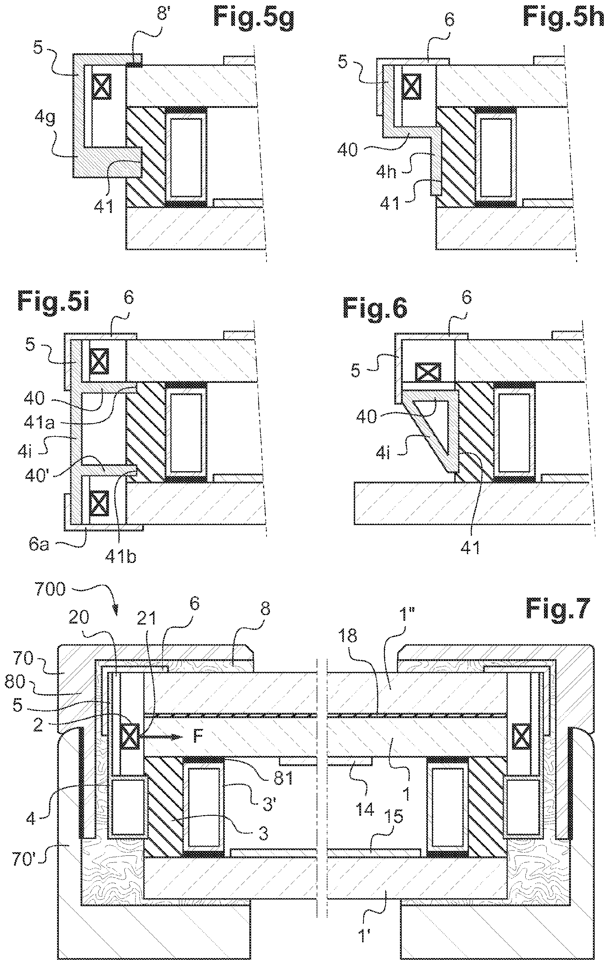

Les figure 5a, 5b, 5c, 5d,5e, 5f, 5g, 5i et 6 représentent des vue schématiques et partielles de coupe transversale de portes vitrées lumineuses de meuble réfrigéré dans une variante du premier mode de réalisation de l'invention.

Ces portes diffèrent par la section de la pièce de fixation (avec partie latérale 40 et partie 41 en contact adhésif direct avec le mastic) de section ouverte. Certaines différent par la suppression de la partie latérale 40opposée à la partie 40 (pièce 4a de la figure 5a4d de la figure 5d, 4e de la figure 5e, 4h de la figure 5h).

La pièce 4b est en forme en C (figure 5b), la pièce 4c est en H à 90° (figure 5c), définissant deux zones de contact (fixation) 41a et 41b dans le mastic 3 et avec une partie par exemple plane 40' parallèle à la partie 40 et plus proche du deuxième vitrage. De même la pièce 4i est de section U (ou en C) avec deux décrochements latéraux formant deux pièces de fond 5. Ici un autre support PCB et des diodes sont en regard du deuxième vitrage (cavité fermé par un autre capot 6a). La partie 40 ou la partie 40' peut quasitoucher le vitrage associé mais de préférence pas les deux si la pièce est métallique enfin d'éviter un pont thermique.

Pour la figure 5d la pièce de fond 5 est distincte de la pièce de fixation (le capot 6 est prolongé pour former la pièce de fond et vient se fixer sur la pièce de fixation).

Pour la figure 5e, la pièce monolithique formant pièce de fond 5 et de fixation 4e forme un T (à 90°).

Pour la figure 5f, la pièce monolithique formant pièce de fond 5 et de fixation 4f forme un L.

Pour la figure 5g, pièce de fond et de fixation 4g forme un L et la pièce monolithique formant pièce de fond, de fixation et capot forme un C.

Pour la figure 5h, pièce de fond 5 et de fixation 4h (en L) forme une marche.

Pour la figure 6, la pièce de fixation 4i est de section triangulaire, et on préfère un deuxième vitrage dépassant pour la protéger lors du montage notamment.

Les diodes à émission latérale sont sur la face latérale 40 en figure 5b, 5c, 5d, 5e,6.

La figure 7 représente une vue schématique partielle de coupe transversale d'une porte vitrée lumineuse de meuble réfrigéré 700 dans une variante du premier mode de réalisation de l'invention qui diffère en ce que le premier vitrage est feuilleté par un intercalaire de feuilletage 18 à un autre verre comportant la face interne (côté usager). Dans cette configuration la pièce de fixation s'étend pour longer toute l'épaisseur du premier vitrage feuilleté.

Par exemple l'extraction de lumière peut se faire par la deuxième face (coté lame de gaz.

On a ajouté sur le bord opposé au bord d'injection d'autres diodes sur PCB avec autre pièce de fixation, pièce de fond et capot.

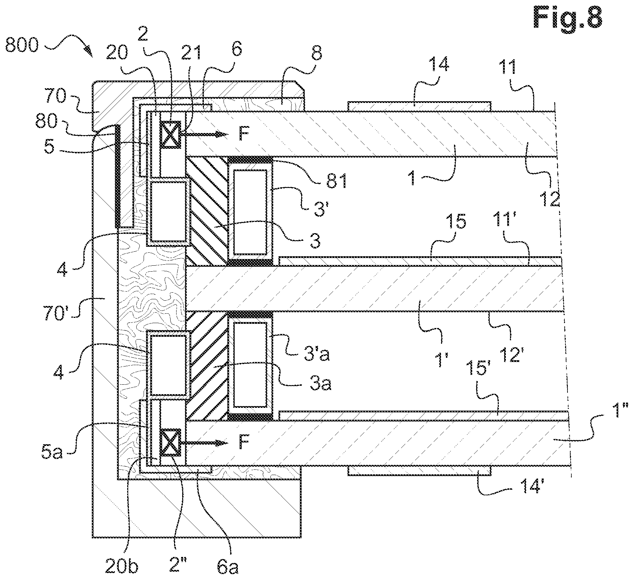

La figure 8 représente une vue schématique partielle de coupe transversale d'une porte vitrée lumineuse de meuble réfrigéré 800 dans une variante du premier mode de réalisation de l'invention qui diffère en ce que le vitrage est un triple vitrage avec une deuxième lame de gaz, un deuxième mastic 3a et intercalaire 3'a

La face 12' n'est plus la face la plus intérieure à l'enceinte. Le troisième vitrage 1" comporte une couche à fonction thermique 15 (coté lame de gaz). On a ajouté sur le bord du troisième vitrage adjacent au bord d'injection d'autres diodes 2" sur PCB 20b avec autre pièce de fixation 4, pièce de fond 5a et capot 6a.

Dans un premier mode de fabrication des modes de réalisations précédents, la pièce de fixation est mise en contact avec le mastic chaud déjà posé. Dans cette configuration, la pièce de fixation n'est pas pourvue d'adhésif (colle ou double face) pour sa fixation au mastic et il n'est pas nécessaire de prévoir un ou des inderts d'accueil de cette pièce de fixation. La pièce de fixation peut aller jusqu'à être presque au contact de l'intercalaire.

Dans un deuxième mode de fabrication (en relation avec les modes de réalisation suivants) la pièce de fixation (profilé de toute forme, de la simple barrette ou une section de type en U) est collé à la première face et on applique le premier joint qui vient alors en contact avec la pièce de fixation (et bien sûr avec l'intercalaire, le premier et le deuxième vitrage)

Plus précisément ce deuxième mode comprend les étapes suivantes :
- on place une cale (de section carré, rectangulaire de préférence) de préférence en matière anti adhérente (téflon) contre le bord d'injection et plus longue que le bord d'injection
- au moins une pièce de préférence métallique formant capot, pièce de fond et pièce de fixation, entoure la cale en étant adhésivée(s) à la face externe et à la deuxième face
- ladite application du joint (formant contact adhésif direct une fois figé)
- le montage d'un profilé d'encadrement au vitrage isolant par collage, avec de la colle dite de montage voire un adhésif double face, incluant un montant d'encadrement en regard du bord d'injection, collé à la pièce de fond
- le retrait de la cale laissant une cavité ouverte latéralement
- le placement de la source de lumière et du support de source dans la cavité par une extrémité latérale

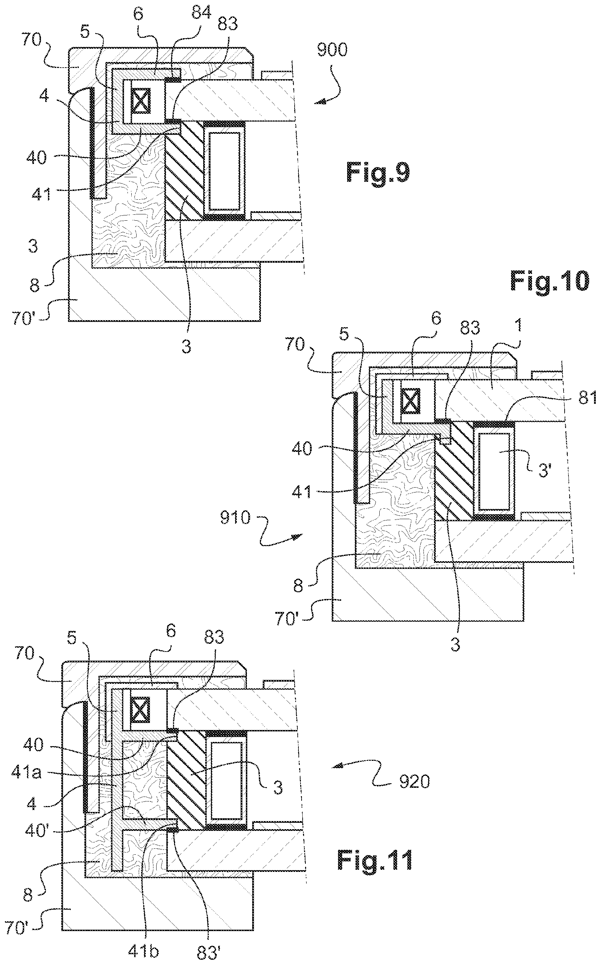

La figure 9 représente une vue schématique partielle de coupe transversale d'une porte vitrée lumineuse de meuble réfrigéré 900 dans un autre mode de réalisation de l'invention.

La porte 900 diffère de la porte 100 par le fait que la pièce de fond s'étend pour former capot. On choisit par exemple une tôle métallique pliée adhésivée pour être collée par colle 83, 84 ou double face aux première et deuxième faces du premier vitrage.

En variante on choisit un film métallique adhésivé avec son film de protection (coté cavité) et donc collé aux deux faces du premier vitrage.

Le PCB pourrait aussi être sur la partie 40 et les diodes à émission par le haut.

La figure 10 représente une vue schématique partielle de coupe transversale d'une porte vitrée lumineuse de meuble réfrigéré 910 dans un autre mode de réalisation de l'invention.

La porte 920 diffère de la porte 9100 par le fait que le capot 6 est une pièce distincte (film métallique adhésivé par exemple) venant se coller à la face arrière de la pièce de fond. La partie 41 n'est pas la tranche de la partie 41 mais un retour perpendiculaire.

En variante on choisit un film métallique adhésivé avec son film de protection (coté cavité) et donc collé aux deux faces du premier vitrage.

Le PCB pourrait aussi être sur la partie 40 et les diodes à émission par le haut.

La figure 11 représente une vue schématique partielle de coupe transversale d'une porte vitrée lumineuse de meuble réfrigéré 920 dans un autre mode de réalisation de l'invention.

La porte 920 diffère de la porte 910 par la forme de la pièce de fixation qui comporte en plus de la partie plane latérale 40 dont la tranche 41a est en contact adhésif direct avec le mastic 3, une autre partie plane latérale 40 dont la tranche 41b est en contact adhésif direct avec le mastic 3 et éventuellement collée au deuxième vitrage par une colle 83'. La pièce de fixation a même un autre décrochement en regard de la tranche du deuxième vitrage

Le PCB pourrait aussi être sur la partie 40 et les diodes à émission par le haut.

La pièce 6 pourrait être une extension de la pièce de fond.

## Revendications

1. Ensemble vitré lumineux (100, 100', 100", 200, 200', 200", 300, 300a, 300b, 300c, 300d, 300', 700, 800, 900, 910, 920) pour porte de meuble réfrigéré (1000) comportant un vitrage isolant avec une face principale externe (11) et une face principale interne (12'), le vitrage isolant comprenant :
- un premier vitrage comportant la face externe et une première tranche formée de bords (13a à 13d), premier vitrage incluant une première feuille en verre (1) présentant une première face principale (11) et une deuxième face principale (12), la première face étant la face externe ou la première feuille étant feuilletée à une autre feuille de verre ou le premier vitrage étant le verre central d'un triple vitrage,
- un deuxième vitrage comportant la face interne (12') et une deuxième tranche formée de bords (13a à 13d), deuxième vitrage incluant une deuxième feuille en verre (1'), avec une troisième face (11') et une quatrième face principale (12'), les deuxième et troisième faces étant espacées par une première lame de gaz, la quatrième face étant la face interne ou la deuxième feuille étant feuilletée à une autre feuille de verre ou encore une troisième feuille en verre est espacée de la deuxième feuille par une deuxième lame de gaz
- en périphérie des deuxième et troisième faces un premier joint polymérique (3) en cadre,
- une source lumineuse externe au vitrage isolant (2), source choisie de préférence parmi :
- des diodes électroluminescentes comportant chacune une puce semi-conductrice avec une face émettrice (21)
- et une fibre optique (2') avec une partie latérale (21') formant la zone émettrice,
source de lumière externe au vitrage isolant couplée optiquement avec l'un des bords (13a), dit bord d'injection, pour une propagation de la lumière par réflexion totale interne dans l'épaisseur du premier vitrage, jouant alors le rôle de guide de la lumière,
- un support de source (20, 20'), portant la source de lumière, ne dépassant pas de la première tranche en direction de la face externe et, qui pour lesdites diodes (2), est une carte à circuit imprimé (20),
- des moyens d'extraction de la lumière guidée (14), associé au premier vitrage, pour former au moins une zone lumineuse, l'ensemble vitré comprenant en outre :
- une pièce, dite de fixation (4), adjacente au bord d'injection, et qui est un profilé longeant la périphérie du bord d'injection
- une pièce dite de fond (5, 5'), en regard et espacée du bord d'injection, la source de lumière étant alors logée entre la pièce de fond et le bord d'injection, le support de source pour la fibre optique pouvant être directement la pièce de fond ou la pièce de fixation,
**caractérisé en ce que** la pièce de fixation (4) est directement en contact adhésif avec le bord externe (30) du joint polymérique (3).

2. Ensemble vitré lumineux (100, 100', 100", 200, 200', 200",300, 300a, 300b, 300c, 300d, 300', 700, 800,900, 910, 920) selon la revendication précédente **caractérisé en ce que** la pièce de fixation (4) comporte une ou plusieurs parties (41a, 41b) espacées, notamment parallèles entre elles, en contact adhésif direct avec le joint polymérique (3) le long du bord d'injection.

3. Ensemble vitré lumineux (100, 100', 100", 200, 200', 200", 300, 300a, 300b, 300c, 300d, 300', 700, 800, 900, 910, 920) selon l'une des revendications précédentes **caractérisé en ce que** la pièce de fixation (4) est métallique et n'est pas en contact à la fois avec le premier vitrage et le deuxième vitrage (1').

4. Ensemble vitré lumineux (100, 100', 100", 200, 200', 200",300, 300a, 300b, 300c, 300', 700, 800, 900, 910, 920) selon l'une des revendications précédentes **caractérisé en ce que** le premier joint (3) est présent entre la pièce de fixation et la deuxième face ou **en ce que** la pièce de fixation est collée par des moyens de collage (83, 83') à la deuxième face et/ou à un intercalaire entre la deuxième face et la troisième face notamment adjacent au premier joint.

5. Ensemble vitré lumineux (100, 100', 100", 200, 200', 200",300, 300a, 300b, 300c, 300d, 300', 700, 800, 900, 910, 920) selon l'une des revendications précédentes **caractérisé en ce que** la pièce de fond (5) est contre ou solidaire de la pièce de fixation (4) ou est contre ou solidaire du deuxième vitrage.

6. Ensemble vitré lumineux (100, 100', 100", 200, 200', 300, 300a, 300', 700, 800, 900, 910, 920) selon l'une des revendications précédentes **caractérisé en ce que** la pièce de fond (5) prolonge la pièce de fixation (4) formant une pièce monolithique de préférence métallique.

7. Ensemble vitré lumineux (300d) selon l'une des revendications précédentes **caractérisé en ce que** la deuxième tranche (13'a) dépassante du bord d'injection (13a) est en saillie du support de source (20) ou de la fibre optique (2') directement sur la pièce de fond, saillie côté opposé au bord d'injection, et le support de source est éventuellement directement en contact adhésif avec le premier joint, et notamment est confondu avec la pièce de fixation.

8. Ensemble vitré lumineux (100, 100', 100", 200, 200', 200", 300, 300a, 300b, 300c, 300d, 300', 700, 800, 900, 910, 920) selon l'une des revendications précédentes **caractérisé en ce qu'**un capot (6, 6') ferme une cavité délimitée par le bord d'injection, la pièce de fixation (4) et la pièce de fond (5, 5'), pièce de fond de préférence contre ou solidaire de la pièce de fixation, logeant la source de lumière (2, 2') et le support de source (20, 20'), fermeture suivant la direction longitudinale du bord d'injection (13a)

9. Ensemble vitré lumineux (100, 100', 100", 200, 200', 200", 300, 300a, 300b, 300c, 300d, 300', 700, 800, 900, 910, 920) selon la revendication précédente **caractérisé en ce que** la cavité est débouchante latéralement, notamment par une ou les deux extrémités latérales.

10. Ensemble vitré lumineux (100, 100', 100", 200, 200', 200", 300, 300a, 300b, 300c, 300d, 300', 700, 800, 900, 910, 920) selon l'une des revendications 8 ou 9 **caractérisé en ce que** le capot (6), de préférence métallique ou en plastique notamment métallisé, a une partie (62) collée ou contre la face externe (11) de préférence en créant une surépaisseur d'au plus 1,5mm.

11. Ensemble vitré lumineux (100, 100', 100", 200, 200', 200", 300, 300a, 300b, 300c, 300d, 300', 700, 800, 900, 910, 920) selon l'une des revendications 8 à 10 **caractérisé en ce que** le capot (6), de préférence métallique ou en plastique notamment métallisé, avec
- une partie (62) collée à la face externe (11), en créant une surépaisseur d'au plus 1mm
- le capot s'étendant pour former la pièce de fond (5'),
et **en ce que** la pièce de fond est solidaire, notamment collée, ou contre la pièce de fixation (4) ou **en ce que** la pièce de fond est espacée de la pièce de fixation et s'étend pour être contre ou collée au deuxième vitrage (1').

12. Ensemble vitré lumineux (100, 100', 100", 200, 200', 200", 300, 300a, 300b, 300c, 300d, 300', 700, 800, 900, 910, 920) selon l'une des revendications 8 à 11 **caractérisé en ce que** le capot (6') prolonge la pièce de fond (5) alors coudée, l'ensemble pièce de fixation-pièce de fond-capot étant une pièce monolithique de préférence métallique, une partie du capot (61) étant collée ou contre la face externe (11).

13. Ensemble vitré lumineux selon la revendication 8 à 11 **caractérisé en ce que** la source de lumière et le support de source n'est pas en contact adhésif dans la cavité notamment le capot (6) comporte une face interne adhésivée (85) porteuse d'un film de protection (65) coté cavité.

14. Ensemble vitré lumineux (100, 100', 100", 200, 200', 200", 300, 300a, 300b, 300c, 300d, 300', 700, 800,900, 910, 920) selon l'une des revendications précédentes **caractérisé en ce qu'**il comprend un profilé d'encadrement comportant un montant d'encadrement (7a) en regard du bord d'injection (13a) et sur au moins la face interne ou la face externe, notamment la pièce de fond étant entre le montant d'encadrement et le bord d'injection fixé au vitrage isolant de préférence par une colle dite de montage (8), la colle de montage éventuelle étant absente de l'espace entre la source de lumière et le bord d'injection.

15. Ensemble vitré lumineux (100, 100', 100", 200, 200', 200", 300, 300a, 300b, 300c, 300d, 300',700, 800,900, 910, 920) selon la revendication précédente **caractérisé en ce qu'**il comporte un montant d'encadrement comprenant :
- une première partie en regard du bord d'injection et de la pièce de fond et dépassant sur la face externe, collé à la face externe voire même à la pièce de fond,
- et une deuxième partie, solidaire par des moyens de collage avec la première partie, en regard de la deuxième tranche adjacente au bord d'injection et éventuellement dépassant sur la face interne, collé à la face interne voire même à la pièce de fixation
l'une des parties étant métallique, l'autre étant isolante thermique.

16. Ensemble vitré lumineux (300') selon la revendication précédente **caractérisé en ce que** la deuxième tranche (13'a) est dépassante du bord d'injection (13a) et de préférence en saillie du support de source (20) ou de la fibre optique (2') directement sur la pièce de fond, saillie côté opposé au bord d'injection, le montant d'encadrement ne comporte par un retour sur la face interne, et la face interne comporte des moyens de masquage du premier joint.

17. Ensemble vitré lumineux (100") selon l'une des revendications 14 à 16 **caractérisé en ce que** le profilé d'encadrement comporte un évidement capoté par une couverture trouée et de préférence étanche avec des moyens d'étanchéité, la couverture et/ou les moyens d'étanchéité étant amovibles et formant trappe d'accès à la source et l'ensemble permettant de préférence le passage de fils d'alimentation électrique de la source.

18. Ensemble vitré lumineux selon la revendication précédente **caractérisé en ce que** la couverture est une pièce fixée, par collage de préférence, sur le profilé d'encadrement et comportant en outre un pivot.

19. Ensemble vitré lumineux selon l'une des revendications 17 ou 18 **caractérisé en ce que** le profilé est collé par une colle au vitrage isolant et la colle est absente entre la trappe d'accès et l'extrémité latérale la plus proche de la cavité débouchante.

20. Porte de meuble réfrigéré comportant un ensemble vitré lumineux selon l'une des revendications précédentes.

21. Enceinte réfrigéré comportant une porte de meuble réfrigéré selon l'une des revendications précédentes.

22. Procédé de fabrication d'un ensemble vitré lumineux selon l'une des revendications 1 à 19 **caractérisé en ce que** l'on fixe la pièce de fixation sur le premier joint encore à l'état collant ou **en ce qu'**on colle la pièce de fixation sur la deuxième face et/ou sur un intercalaire entre la deuxième face et troisième face et on applique le premier joint qui vient alors en contact avec la pièce de fixation.

23. Procédé de fabrication d'un ensemble vitré lumineux selon la revendication précédente **caractérisé en ce qu'**il comporte les étapes suivantes dans cet ordre après que l'on fixe la pièce de fixation sur le premier joint encore à l'état collant :
- on forme une cavité délimitée par le bord d'injection, la pièce de fixation et la pièce de fond formant un décrochement latéral de la pièce de fixation, cavité débouchante latéralement,
- on loge la source de lumière (2, 2') et le support de source (20, 20') dans la cavité
- on ferme par un capot la cavité suivant la direction longitudinale du bord d'injection (13a) et la cavité reste débouchante latéralement,
- on monte un profilé d'encadrement au vitrage isolant par collage, avec de la colle dite de montage ou un adhésif double face, incluant un montant d'encadrement en regard du bord d'injection.

24. Procédé de fabrication d'un ensemble vitré lumineux selon la revendication 22 **caractérisé en ce qu'**il comporte les étapes suivantes dans cet ordre :
- on place une cale notamment en matière anti adhérente contre le bord d'injection et plus longue que le bord d'injection
- au moins une pièce de préférence métallique formant capot, pièce de fond et pièce de fixation, entoure la cale en étant adhésivée(s) à la face externe et à la deuxième face et/ou l'intercalaire
- ladite application du joint
et de préférence
- le montage d'un profilé d'encadrement au vitrage isolant par collage, avec de la colle dite de montage ou un adhésif double face, incluant un montant d'encadrement en regard du bord d'injection, collé à la pièce de fond
- le retrait de la cale laissant une cavité ouverte latéralement
- le placement de la source de lumière et du support de source dans la cavité.

25. Procédé de fabrication d'un ensemble vitré lumineux selon l'une des revendications 23 ou 24 **caractérisé en ce que** la colle de montage éventuelle est absente au moins entre le montant d'encadrement et l'extrémité latérale de la cavité, le profilé d'encadrement comportant un évidement capoté par une couverture étanche et avec des moyens d'étanchéité, la couverture et/ou les moyens d'étanchéité étant amovibles et formant trappe d'accès à la source et l'ensemble permettant de préférence le passage de fils d'alimentation électrique de la source, on retire la couverture et/ou les moyens d'étanchéité, on retire la source. par l'extrémité latérale de la cavité débouchante.

## Patentansprüche

1. Leuchtende verglaste Anordnung (100, 100', 100", 200, 200', 200", 300, 300a, 300b, 300c, 300d, 300', 700, 800, 900, 910, 920) für eine Tür eines Kühlmöbels (1000), die eine Isolierverglasung mit einer äußeren Hauptseite (11) und einer inneren Hauptseite (12') aufweist, wobei die Isolierverglasung umfasst:
- eine erste Verglasung, die die Außenseite und ein erstes Teilstück aufweist, das aus Rändern (13a bis 13d) gebildet ist, wobei die erste Verglasung eine erste Glasscheibe (1), die eine erste Hauptseite (11) und eine zweite Hauptseite (12) vorweist, einschließt, wobei die erste Seite die Außenseite ist oder die erste Scheibe auf eine andere Glasscheibe auflaminiert ist oder die erste Verglasung das Mittelglas einer Dreifachverglasung ist,
- eine zweite Verglasung, die die Innenseite (12') und ein zweites Teilstück aufweist, das aus Rändern (13a bis 13d) gebildet ist, wobei die zweite Verglasung eine zweite Glasscheibe (1') mit einer dritten Seite (11') und einer vierten Hauptseite (12') einschließt, wobei die zweite und die dritte Seite durch einen ersten Gaszwischenraum beabstandet sind, wobei die vierte Seite die Innenseite ist oder die zweite Scheibe auf eine andere Glasscheibe auflaminiert ist, oder auch eine dritte Glasscheibe durch einen zweiten Gaszwischenraum von der zweiten Scheibe beabstandet ist
- an einem Umfang der zweiten und der dritten Seite eine erste Polymerdichtung (3) in Rahmenform,
- eine Lichtquelle außerhalb der Isolierverglasung (2), wobei die Quelle vorzugsweise ausgewählt ist aus:
- Leuchtdioden, die jeweils einen Halbleiterchip mit einer Emissionsseite (21) aufweisen
- und einer Lichtleitfaser (2') mit einem Seitenteil (21'), der die Emissionszone bildet,
wobei die Lichtquelle außerhalb der Isolierverglasung optisch mit einem der Ränder (13a), dem sogenannten Einspeisungsrand, für eine Lichtausbreitung durch interne Totalreflexion in der Dicke der ersten Verglasung gekoppelt ist, wobei er dann als Lichtleiter fungiert,
- einen die Lichtquelle tragenden Quellenträger (20, 20'), der nicht über das erste Teilstück in Richtung der Außenseite hinausragt, und der für die Dioden (2) eine gedruckte Leiterplatte (20) ist,
- Mittel für eine Extraktion des geleiteten Lichts (14), das der ersten Verglasung zugeordnet ist, um mindestens eine Lichtzone zu bilden, wobei die verglaste Anordnung ferner umfasst:
- ein sogenanntes Befestigungselement (4), das an den Einspeisungsrand angrenzt und das ein Profil ist, das entlang des Umfangs des Einspeisungsrands verläuft
- ein sogenanntes Bodenelement (5, 5'), das gegenüber dem Einspeisungsrand beabstandet ist,
wobei die Lichtquelle dann zwischen dem Bodenelement und dem Einspeisungsrand aufgenommen ist, wobei der Quellenträger für die Lichtleitfaser direkt das Bodenelement oder das Befestigungselement sein kann,
**dadurch gekennzeichnet, dass** das Befestigungselement (4) direkt in Haftkontakt mit dem äußeren Rand (30) der Polymerdichtung (3) ist.

2. Leuchtende verglaste Anordnung (100, 100', 100", 200, 200', 200",300, 300a, 300b, 300c, 300d, 300', 700, 800, 900, 910, 920) nach dem vorstehenden Anspruch, **dadurch gekennzeichnet, dass** das Befestigungselement (4) einen oder mehrere beabstandete, insbesondere zueinander parallele Teile (41a, 41b) aufweist, die entlang des Einspeisungsrands in direktem Haftkontakt mit der Polymerdichtung (3) sind.

3. Leuchtende verglaste Anordnung (100, 100', 100", 200, 200', 200", 300, 300a, 300b, 300c, 300d, 300', 700, 800, 900, 910, 920) nach einem der vorstehenden Ansprüche, **dadurch gekennzeichnet, dass** das Befestigungselement (4) aus Metall ist und weder mit der ersten Verglasung noch mit der zweiten Verglasung (1') in Kontakt ist.

4. Leuchtende verglaste Anordnung (100, 100', 100", 200, 200', 200",300, 300a, 300b, 300c, 300', 700, 800, 900, 910, 920) nach einem der vorstehenden Ansprüche, **dadurch gekennzeichnet, dass** die erste Dichtung (3) zwischen dem Befestigungselement und der zweiten Seite vorhanden ist oder **dass** das Befestigungselement durch Klebemittel (83, 83') mit der zweiten Seite und/oder mit einer Zwischenlage zwischen der zweiten Seite und der dritten Seite, insbesondere angrenzend an die erste Dichtung, verklebt ist.

5. Leuchtende verglaste Anordnung (100, 100', 100", 200, 200', 200",300, 300a, 300b, 300c, 300d, 300', 700, 800, 900, 910, 920) nach einem der vorstehenden Ansprüche, **dadurch gekennzeichnet, dass** das Bodenelement (5) an dem Befestigungselement (4) anliegt oder mit diesem fest verbunden ist oder an der zweiten Verglasung anliegt oder mit dieser fest verbunden ist.

6. Leuchtende verglaste Anordnung (100, 100', 100", 200, 200', 300, 300a, 300', 700, 800, 900, 910, 920) nach einem der vorstehenden Ansprüche, **dadurch gekennzeichnet, dass** das Bodenelement (5) das Befestigungselement (4) verlängert, wobei ein monolithisches Element, vorzugsweise aus Metall, gebildet wird.

7. Leuchtende verglaste Anordnung (300d) nach einem der vorstehenden Ansprüche, **dadurch gekennzeichnet, dass** das über den Einspeisungsrand (13a) hinausragende zweite Teilstück (13'a) von dem Quellenträger (20) oder der Lichtleitfaser (2') direkt auf dem Bodenelement vorspringt, wobei es auf der dem Einspeisungsrand gegenüberliegenden Seite vorspringt, und der Quellenträger gegebenenfalls direkt in Haftkontakt mit der ersten Dichtung steht und insbesondere mit dem Befestigungselement zusammenfällt.

8. Leuchtende verglaste Anordnung (100, 100', 100", 200, 200', 200", 300, 300a, 300b, 300c, 300d, 300', 700, 800, 900, 910, 920) nach einem der vorstehenden Ansprüche, **dadurch gekennzeichnet, dass** eine Abdeckung (6, 6') einen Hohlraum verschließt, der durch den Einspeisungsrand, das Befestigungselement (4) und das Bodenelement (5, 5') begrenzt wird, wobei das Bodenelement vorzugsweise an dem Befestigungselement anliegt oder mit diesem fest verbunden ist, wobei die Lichtquelle (2, 2') und der Quellenträger (20, 20') aufgenommen werden, wobei das Verschließen entlang der Längsrichtung des Einspeisungsrands (13a) erfolgt.

9. Leuchtende verglaste Anordnung (100, 100', 100", 200, 200', 200", 300, 300a, 300b, 300c, 300d, 300', 700, 800, 900, 910, 920) nach dem vorstehenden Anspruch, **dadurch gekennzeichnet, dass** der Hohlraum seitlich, insbesondere durch ein oder die zwei seitlichen Enden, ausmündet.

10. Leuchtende verglaste Anordnung (100, 100', 100", 200, 200', 200", 300, 300a, 300b, 300c, 300d, 300', 700, 800, 900, 910, 920) nach einem der Ansprüche 8 oder 9, **dadurch gekennzeichnet, dass** die Abdeckung (6), vorzugsweise aus Metall oder aus Kunststoff, insbesondere metallisiert, einen Teil (62) besitzt, der mit der Außenseite (11) verklebt ist oder an dieser anliegt, wobei vorzugsweise eine Überdicke von höchstens 1,5 mm hergestellt wird.

11. Leuchtende verglaste Anordnung (100, 100', 100", 200, 200', 200", 300, 300a, 300b, 300c, 300d, 300', 700, 800, 900, 910, 920) nach einem der Ansprüche 8 bis 10, **dadurch gekennzeichnet, dass** die Abdeckung (6), vorzugsweise aus Metall oder aus Kunststoff, insbesondere metallisiert, ist mit
- einem Teil (62), der mit der Außenseite (11) verklebt ist, wobei eine Überdicke von höchstens 1 mm hergestellt wird
- der Abdeckung, die sich erstreckt, um das Bodenelement (5') zu bilden,
und **dass** das Bodenelement fest mit dem Befestigungselement (4) verbunden, insbesondere verklebt, ist oder an diesem anliegt, oder **dass** das Bodenelement von dem Befestigungselement beabstandet ist und sich erstreckt, um an der zweiten Verglasung (1') anzuliegen oder mit dieser verklebt zu sein.

12. Leuchtende verglaste Anordnung (100, 100', 100", 200, 200', 200", 300, 300a, 300b, 300c, 300d, 300', 700, 800, 900, 910, 920) nach einem der Ansprüche 8 bis 11, **dadurch gekennzeichnet, dass** die Abdeckung (6') das nun abgewinkelte Bodenelement (5) verlängert, wobei die Anordnung aus Befestigungselement, Bodenelement und Abdeckung ein monolithisches Element, vorzugsweise aus Metall, ist, wobei ein Teil der Abdeckung (61) mit der Außenseite (11) verklebt ist oder an dieser anliegt.

13. Leuchtende verglaste Anordnung nach Anspruch 8 bis 11,
**dadurch gekennzeichnet, dass** die Lichtquelle und der Quellenträger in dem Hohlraum nicht in Haftkontakt stehen, insbesondere die Abdeckung (6) eine verklebte Innenseite (85) aufweist, die auf der Hohlraumseite einen Schutzfilm (65) trägt.

14. Leuchtende verglaste Anordnung (100, 100', 100", 200, 200', 200", 300, 300a, 300b, 300c, 300d, 300', 700, 800, 900, 910, 920) nach einem der vorstehenden Ansprüche, **dadurch gekennzeichnet, dass** sie ein Rahmenprofil, das einen Rahmenpfosten (7a) aufweist, gegenüber dem Einspeisungsrand (13a) und auf mindestens der Innenseite oder der Außenseite umfasst, wobei insbesondere das Bodenelement zwischen dem Rahmenpfosten und dem Einspeisungsrand vorzugsweise durch einen sogenannten Montagekleber (8) an der Isolierverglasung befestigt ist, wobei der eventuelle Montagekleber in dem Raum zwischen der Lichtquelle und dem Einspeisungsrand fehlt.

15. Leuchtende verglaste Anordnung (100, 100', 100", 200, 200', 200", 300, 300a, 300b, 300c, 300d, 300',700, 800, 900, 910, 920) nach dem vorstehenden Anspruch, **dadurch gekennzeichnet, dass** sie einen Rahmenpfosten aufweist, umfassend:
- einen ersten Teil, der dem Einspeisungsrand und dem Bodenelement gegenüberliegt und über die Außenseite hinausragt, der mit der Außenseite oder sogar mit dem Bodenelement verklebt ist,
- und einen zweiten Teil, der durch Klebemittel fest mit dem ersten Teil verbunden ist, gegenüber dem zweiten Teilstück, das an den Einspeisungsrand angrenzt und gegebenenfalls über die Innenseite hinausragt, der mit der Innenseite oder sogar mit dem Befestigungselement verklebt ist, wobei einer der Teile aus Metall, der andere wärmeisolierend ist.

16. Leuchtende verglaste Anordnung (300') nach dem vorstehenden Anspruch, **dadurch gekennzeichnet, dass** das zweite Teilstück (13'a) über den Einspeisungsrand (13a) hinausragt und vorzugsweise von dem Quellenträger (20) oder der Lichtleitfaser (2') direkt auf dem Bodenelement vorspringt, wobei es auf der dem Einspeisungsrand gegenüberliegenden Seite vorspringt, wobei der Rahmenpfosten keine Rückführung auf der Innenseite aufweist und die Innenseite Mittel für eine Maskierung der ersten Dichtung aufweist.

17. Leuchtende verglaste Anordnung (100") nach einem der Ansprüche 14 bis 16, **dadurch gekennzeichnet, dass** das Rahmenprofil eine Aussparung aufweist, die durch eine perforierte und vorzugsweise undurchlässige Hülle mit Undurchlässigkeitsmitteln abgedeckt wird, wobei die Hülle und/oder die Undurchlässigkeitsmittel abnehmbar sind und eine Zugangsklappe zu der Quelle bilden und die Anordnung vorzugsweise den Durchgang von Drähten für eine Stromversorgung der Quelle ermöglicht.

18. Leuchtende verglaste Anordnung nach dem vorstehenden Anspruch, **dadurch gekennzeichnet, dass** die Hülle ein Element ist, das vorzugsweise durch Verkleben an dem Rahmenprofil befestigt ist und ferner einen Drehpunkt aufweist.

19. Leuchtende verglaste Anordnung nach einem der Ansprüche 17 oder 18, **dadurch gekennzeichnet, dass** das Profil durch einen Kleber mit der Isolierverglasung verklebt ist und der Kleber zwischen der Zugangsklappe und dem seitlichen Ende, das dem ausmündenden Hohlraum am nächsten liegt, fehlt.

20. Kühlmöbeltür, die eine leuchtende verglaste Anordnung nach einem der vorstehenden Ansprüche aufweist.

21. Kühlgehäuse, das eine Kühlmöbeltür nach einem der vorstehenden Ansprüche aufweist.

22. Verfahren zum Fertigen einer leuchtenden verglasten Anordnung nach einem der Ansprüche 1 bis 19, **dadurch gekennzeichnet, dass** das Befestigungselement auf der ersten Dichtung befestigt wird, die sich noch in dem klebrigen Zustand befindet, oder **dass** das Befestigungselement auf der zweiten Seite und/oder auf einer Zwischenlage zwischen der zweiten Seite und der dritten Seite verklebt wird und die erste Dichtung angebracht wird, die dann mit dem Befestigungselement in Kontakt kommt.

23. Verfahren zum Fertigen einer leuchtenden verglasten Anordnung nach dem vorstehenden Anspruch, **dadurch gekennzeichnet, dass** es die folgenden Schritte in dieser Reihenfolge aufweist, nachdem das Befestigungselement an der ersten, noch in dem klebrigen Zustand befindlichen Dichtung befestigt wurde:
- Bilden eines Hohlraums, der durch den Einspeisungsrand begrenzt wird, wobei das Befestigungselement und das Bodenelement einen seitlichen Absatz des Befestigungselements bilden, wobei der Hohlraum seitlich ausmündet,
- Aufnehmen der Lichtquelle (2, 2') und des Quellenträgers (20, 20') in dem Hohlraum
- Verschließen des Hohlraums entlang der Längsrichtung des Einspeisungsrands (13a) durch eine Abdeckung und wobei der Hohlraum seitlich ausmündend bleibt,
- Montieren eines Rahmenprofils an der Isolierverglasung durch Verkleben mit dem sogenannten Montagekleber oder einem doppelseitigen Klebeband, das einen Rahmenpfosten einschließt, gegenüber dem Einspeisungsrand.

24. Verfahren zum Fertigen einer leuchtenden verglasten Anordnung nach Anspruch 22, **dadurch gekennzeichnet, dass** es die folgenden Schritte in dieser Reihenfolge umfasst:
- Platzieren eines Keils, der insbesondere aus einem nicht haftenden Material besteht, der an dem Einspeisungsrand anliegt und länger als der Einspeisungsrand ist
- mindestens ein Element, vorzugsweise aus Metall, das die Abdeckung, das Bodenelement und das Befestigungselement bildet, umgibt den Keil, indem es/sie an der Außenseite und der zweiten Seite und/oder der Zwischenlage haftet/haften
- Anbringen der Dichtung und vorzugsweise
- Montieren eines Rahmenprofils an der Isolierverglasung durch Verkleben, mit dem sogenanntem Montagekleber oder einem doppelseitigem Klebeband, einschließlich eines Rahmenpfostens, gegenüber dem Einspeisungsrand, der mit dem Bodenelement verklebt ist
- Entfernen des Keiles, wobei ein seitlich offener Hohlraum zurückbleibt
- Platzieren der Lichtquelle und des Quellenträgers in dem Hohlraum.

25. Verfahren zum Fertigen einer leuchtenden verglasten Anordnung nach einem der Ansprüche 23 oder 24, **dadurch gekennzeichnet, dass** der optionale Montagekleber mindestens zwischen dem Rahmenpfosten und dem seitlichen Ende des Hohlraums fehlt, wobei das Rahmenprofil eine Aussparung aufweist, die durch eine undurchlässige Hülle und mit Undurchlässigkeitsmitteln abgedeckt ist, wobei die Hülle und/oder die Undurchlässigkeitsmittel abnehmbar sind und eine Zugangsklappe zu der Quelle bilden und die Anordnung vorzugsweise den Durchgang von Drähten für die Stromversorgung der Quelle ermöglicht, wobei durch das seitliche Ende des ausmündenden Hohlraums die Hülle und/oder die Undurchlässigkeitsmittel entfernt werden, die Quelle entfernt wird.

## Claims

1. A light-emitting glazing assembly (100, 100', 100", 200, 200', 200", 300, 300a, 300b, 300c, 300d, 300', 700, 800, 900, 910, 920) for a door for a piece of refrigerating equipment (1000) comprising an insulating glazing unit having an external main face (11) and an internal main face (12'), the insulating glazing unit containing:
- a first glazing unit comprising the external face and a first edge formed from edge faces (13a to 13d), said first glazing unit including a first glass sheet (1) having a first main face (11) and a second main face (12), the first face being the external face or the first sheet being laminated to another glass sheet or the first glazing unit being the central pane of a triple glazing unit;
- a second glazing unit comprising the internal face (12') and a second edge formed from edge faces (13a to 13d), said second glazing unit including a second glass sheet (1'), having a third face (11') and a fourth main face (12'), the second and third faces being spaced apart by a first gas-filled cavity, the fourth face being the internal face or the second sheet being laminated to another glass sheet or indeed a third sheet made of glass is spaced apart from the second sheet by a second gas-filled cavity;
- on the periphery of the second and third faces, a first polymeric seal (3) forming a frame;
- a light source external to the insulating glazing unit (2), said source preferably being chosen from:
- light-emitting diodes each comprising a semiconductor chip having an emissive face (21), and
- an optical fiber (2') having a lateral portion (21') forming the emissive zone, said light source external to the insulating glazing unit being optically coupled to one of the edge faces (13a), referred to as the injection edge face, in order to propagate light by total internal reflection in the thickness of the first glazing unit, which then plays the role of a light guide;
- a source carrier (20, 20') bearing the light source and not extending beyond the first edge in the direction of the external face and, which, for said diodes (2), is a printed circuit board (20); and
- means for extracting the guided light (14), associated with the first glazing unit, in order to form at least one luminous zone;
the glazing assembly furthermore comprising:
- a part, referred to as a fastening part (4), adjacent to the injection edge face, and that is a profile placed along the periphery of the injection edge face; and
- what is referred to as a bottom part (5, 5'), facing and spaced apart from the injection edge face,
the light source then being housed between the bottom part and the injection edge face, the source carrier for the optical fiber possibly being the bottom part or the fastening part directly **characterized in that** the fastening part (4), making direct adhesive contact with the external edge face of the polymeric seal (3).

2. The light-emitting glazing assembly (100, 100', 100", 200, 200', 200", 300, 300a, 300b, 300c, 300d, 300', 700, 800, 900, 910, 920) as claimed in the preceding claim, **characterized in that** the fastening part (4) comprises one or more portions (41a, 41b) that are spaced apart, especially parallel to one another, and make direct adhesive contact with the polymeric seal (3) along the injection edge face.

3. The light-emitting glazing assembly (100, 100', 100", 200, 200', 200", 300, 300a, 300b, 300c, 300d, 300', 700, 800, 900, 910, 920) as claimed in one of the preceding claims, **characterized in that** the fastening part (4) is made of metal and does not make contact both with the first glazing unit and the second glazing unit (1').

4. The light-emitting glazing assembly (100, 100', 100", 200, 200', 200", 300, 300a, 300b, 300c, 300', 700, 800, 900, 910, 920) as claimed in one of the preceding claims, **characterized in that** the first seal (3) is present between the fastening part and the second face or **in that** the fastening part is adhesively bonded by adhesive bonding means (83, 83') to the second face and/or to an insert between the second face and the third face, especially adjacent to the first seal.

5. The light-emitting glazing assembly (100, 100', 100", 200, 200', 200", 300, 300a, 300b, 300c, 300d, 300', 700, 800, 900, 910, 920) as claimed in one of the preceding claims, **characterized in that** the bottom part (5) is against or securely fastened to the fastening part (4) or is against or securely fastened to the second glazing unit.

6. The light-emitting glazing assembly (100, 100', 100", 200, 200', 300, 300a, 300', 700, 800, 900, 910, 920) as claimed in one of the preceding claims, **characterized in that** the bottom part (5) extends the fastening part (4) these two parts forming a part of unitary construction that is preferably made of metal.

7. The light-emitting glazing assembly (300d) as claimed in one of the preceding claims, **characterized in that** the second edge (13'a) extending beyond the injection edge face (13a) protrudes past the source carrier (20) or the optical fiber (2') directly on the bottom part, said protrusion being on the opposite side to the injection edge face, and the source carrier optionally makes direct adhesive contact with the first seal, and in particular is merged with the fastening part.

8. The light-emitting glazing assembly (100, 100', 100", 200, 200', 200", 300, 300a, 300b, 300c, 300d, 300', 700, 800, 900, 910, 920) as claimed in one of the preceding claims, **characterized in that** a cap (6, 6') closes a cavity bounded by the injection edge face, the fastening part (4) and the bottom part (5, 5'), said bottom part preferably being against or securely fastened to the fastening part, housing the light source (2, 2') and the source carrier (20, 20'), said closure following the longitudinal direction of the injection edge face (13a) .

9. The light-emitting glazing assembly (100, 100', 100", 200, 200', 200", 300, 300a, 300b, 300c, 300d, 300', 700, 800, 900, 910, 920) as claimed in the preceding claims, **characterized in that** the cavity opens laterally, especially via one or both lateral ends.

10. The light-emitting glazing assembly (100, 100', 100", 200, 200', 200", 300, 300a, 300b, 300c, 300d, 300', 700, 800, 900, 910, 920) as claimed in one of claims 8 and 9, **characterized in that** the cap (6), which is preferably made of plastic and especially metalized plastic or of metal, has a portion (62) against or adhesively bonded to the external face (11), this increasing thickness by at most 1.5 mm.

11. The light-emitting glazing assembly (100, 100', 100", 200, 200', 200", 300, 300a, 300b, 300c, 300d, 300', 700, 800, 900, 910, 920) as claimed in one of claims 8 to 10, **characterized in that** the cap (6), which is preferably made of plastic and especially metalized plastic or of metal, has:
- a portion (62) adhesively bonded to the external face (11), this increasing thickness by at most 1 mm,
- the cap extending to form the bottom part (5'); and **in that** the bottom part is against or securely fastened, especially adhesively bonded, to the fastening part (4) or **in that** the bottom part is spaced apart from the fastening part and extends in order to be against or adhesively bonded to the second glazing unit (1').

12. The light-emitting glazing assembly (100, 100', 100", 200, 200', 200", 300, 300a, 300b, 300c, 300d, 300', 700, 800, 900, 910, 920) as claimed in one of claims 8 to 11, **characterized in that** the cap (6') extends the bottom part (5) which is then bent at an angle, the fastening part/bottom part/cap assembly being a part of unitary construction that is preferably made of metal, a portion of the cap (61) being against or adhesively bonded to the external face (11).

13. The light-emitting glazing assembly as claimed in one of claims 8 to 11, **characterized in that** the light source and the source carrier does not make adhesive contact in the cavity, the cap (6) in particular comprising an adhesive-coated internal face (85) bearing a protective film (65) on the cavity side.

14. The light-emitting glazing assembly (100, 100', 100", 200, 200', 200", 300, 300a, 300b, 300c, 300d, 300', 700, 800, 900, 910, 920) as claimed in one of the preceding claims, **characterized in that** it contains a framing profile comprising a framing jamb (7a) facing the injection edge face (13a) and on at least the internal or the external face, the bottom part in particular being between the framing jamb and the injection edge face and fastened to the insulating glazing unit preferably by an adhesive referred to as a mounting adhesive (8), the optional mounting adhesive being absent from the space between the light source and the injection edge face.

15. The light-emitting glazing assembly (100, 100', 100", 200, 200', 200", 300, 300a, 300b, 300c, 300d, 300', 700, 800, 900, 910, 920) as claimed in the preceding claim, **characterized in that** it comprises a framing jamb containing:
- a first portion facing the injection edge face and the bottom part and extending onto the external face, adhesively bonded to the external face or even to the bottom part; and
- a second portion, securely fastened via adhesive bonding means to the first portion, facing the second edge adjacent to the injection edge face and optionally extending onto the internal face, adhesively bonded to the internal face or even to the fastening part;
one of the portions being made of metal, the other being thermally insulating.

16. The light-emitting glazing assembly (300') as claimed in the preceding claim, **characterized in that** the second edge (13'a) extends beyond the injection edge face (13a) and preferably protrudes past the source carrier (20) or the optical fiber (2') directly on the bottom part, said protrusion being on the opposite side to the injection edge face, the framing jamb does not comprise a lip on the internal face and the internal face comprises means for masking the first seal.

17. The light-emitting glazing assembly (100") as claimed in one of claims 14 to 16, **characterized in that** the framing profile comprises a void capped by a preferably impermeable apertured cover with sealing means, the cover and/or the sealing means being removable and forming an access flap allowing access to the source, this assembly preferably allowing electrical power cables to be run to the source.

18. The light-emitting glazing assembly as claimed in the preceding claim, **characterized in that** the cover is a part fastened, preferably by adhesive bonding, to the framing profile and furthermore comprising a pivot.

19. The light-emitting glazing assembly as claimed in one of claims 17 and 18, **characterized in that** the profile is adhesively bonded by an adhesive to the insulating glazing unit and the adhesive is absent between the access flap and the lateral end closest to the open cavity.

20. A door for a piece of refrigerating equipment comprising a light-emitting glazing assembly as claimed in one of the preceding claims.

21. A refrigerated enclosure comprising a door for a piece of refrigerating equipment as claimed in one of the preceding claims.

22. A process for manufacturing a light-emitting glazing assembly as claimed in one of claims 1 to 19, **characterized in that** the fastening part is fastened to the first seal while the latter is still in the adhesive state or **in that** the fastening part is adhesively bonded to the second face and/or to an insert between the second face and the third face and the first seal is applied, the seal then making contact with the fastening part.

23. The process for manufacturing a light-emitting glazing assembly as claimed in the preceding claim, **characterized in that** it comprises the following steps in order after the fastening part has been fastened to the first seal while the latter is still in the adhesive state:
- a cavity is formed bounded by the injection edge face, the fastening part and the bottom part forming a lateral projection of the fastening part, said cavity opening laterally;
- the light source (2, 2') and the source carrier (20, 20') are housed in the cavity;
- the cavity is closed with a cap in the longitudinal direction of the injection edge face (13a) and the cavity remains open laterally; and
- a framing profile is mounted on the insulating glazing unit by adhesive bonding, with the adhesive referred to as the mounting adhesive or with a double-sided adhesive tape, said profile including a framing jamb facing the injection edge face.

24. The process for manufacturing a light-emitting glazing assembly as claimed in claim 22, **characterized in that** it comprises the following steps in order:
- a shim, especially made of a non-stick material, is placed against the injection edge face, the shim being longer than the injection edge face;
- at least one preferably metal part forming a cap, bottom part and fastening part, is placed around the shim and adhesively fastened to the external face and to the second face and/or insert; and
- said seal is applied;
and preferably
- a framing profile is mounted on the insulating glazing unit by adhesive bonding, with the adhesive referred to as the mounting adhesive or with a double-sided adhesive tape, said profile including a framing jamb facing the injection edge face and adhesively bonded to the bottom part;
- the shim is removed leaving a laterally open cavity; and
- the light source and the source carrier are placed in the cavity.

25. The process for manufacturing a light-emitting glazing assembly as claimed in one of claims 23 and 24, **characterized in that** the optional mounting adhesive is absent at least between the framing jamb and the lateral end of the cavity and, the framing profile comprising a void capped by an impermeable cover and with sealing means, the cover and/or the sealing means being removable and forming an access flap allowing access to the source and this assembly preferably allowing electrical power cables to be run to the source, the cover and/or the sealing means are removed and the source is removed via the lateral end of the open cavity.
